# EUROPEAN PATENT APPLICATION

(11) **EP 4 553 536 A1**
(43) Date of publication of application: **14.05.2025**
(21) Application number: 23834378.4
(22) Date of filing: 17.02.2023
(51) Int. Cl.: G01S 7/481, G01S 17/89

(54) **LASER RADAR DETECTION METHOD, SYSTEM, AND LASER RADAR**

(30) Priority: 04.07.2022 CN 202210779374
(71) Applicant: Hesai Technology Co., Ltd., Shanghai 201815 (CN)
(72) Inventor: SHI, Congbo, Shanghai 201815 (CN); XIANG, Shaoqing, Shanghai 201815 (CN)
(74) Representative: Fish & Richardson P.C.
(86) International application number: PCT/CN2023/077003
(87) International publication number: WO 2024/007594

(57) **Abstract**

This specification provides a method, and system for detection of a LiDAR, and a LiDAR. Multiple lasers are divided into multiple groups, and during a detection process in a current horizontal orientation, polling detection is performed in groups. In addition, an emission strategy for a next group is determined based on a detection result and light intensity of a previous group. In the horizontal orientation, rather than after detection in a full horizontal field of view, a specific channel encountering high-reflectivity object is accurately identified, and then precisely controlled. That is, by reducing the light intensity of a detection channel covered by the high-reflectivity obstacle, a crosstalk that the high-reflectivity obstacle can cause to other detection channels is suppressed, thereby effectively avoiding ghost images. Meanwhile, for detection channels not covered by the high-reflectivity obstacle, optical signals with high intensity can continue to be used to maintain a ranging capability and accuracy of the LiDAR.

## Description

### TECHNICAL FIELD

This specification relates to the field of LiDAR detection technologies, and in particular, to a method, and a system for detection of a LiDAR, and a LiDAR.

### BACKGROUND

As an active sensor that perceives a surrounding environment through its own emitted laser beam, a LiDAR ("Light Detection And Ranging") is mainly used in fields of autonomous vehicle environment perception, robot environment perception, unmanned aerial vehicle mapping, or the like. To determine as much three-dimensional information as possible of a scanned area, a multi-line LiDAR is currently widely used. The multi-line LiDAR uses multiple light-emitter units (e.g., lasers) and corresponding detectors arranged in a vertical direction to cover a wider vertical field of view, and uses a multi-channel parallel light emission to improve resolution or frequency of point cloud. If there is a high-reflectivity obstacle in one of multiple parallel emission channels, a reflection signal reflected by the high-reflectivity obstacle can cause crosstalk to detection results of other channels, further causing crosstalk to other channels, which can result in a ghost image.

In such a case, it is beneficial to provide a new method, and a system for detection of a LiDAR, and a LiDAR to adjust light intensity of a detection channel corresponding to the high-reflectivity obstacle, which can reduce crosstalk between detection channels.

### SUMMARY

This specification provides a new method, and a system for detection of a LiDAR, and a LiDAR to adjust light intensity of a detection channel corresponding to a high-reflectivity obstacle, which can reduce crosstalk between detection channels.

In a first aspect, this specification provides a method for detection of a LiDAR, where the LiDAR includes multiple lasers and multiple detectors, and the method includes: dividing all of the multiple lasers into multiple groups, with lasers within each group emitting light in parallel; detecting an echo using the multiple detectors; determining an emission strategy fora next group of lasers configured to emit light in parallel based on detection results of the multiple detectors and a light intensity of emitted lasers, where the emission strategy allows lasers emitted in parallel to have different light intensities; and controlling the next group of lasers to emit light based on the emission strategy.

In some embodiments, determining the emission strategy for the next group of lasers configured to emit light in parallel based on the detection results of the multiple detectors and the light intensity of the emitted lasers includes: determining whether a detected group has encountered a high-reflectivity obstacle based on the detection results of the multiple detectors, where the high-reflectivity obstacle includes an object with a reflectivity exceeding a predetermined reflectivity threshold; and determining the emission strategy for the next group of lasers based on whether the detected group has encountered the high-reflectivity obstacle and the light intensity of the emitted lasers.

In some embodiments, the emission strategy in the method for detection of the LiDAR includes at least one of light intensity or a relative time sequence of emission across multiple detection channels within the group.

In some embodiments, the light intensity in the method for detection of the LiDAR includes one of high intensity, low intensity, and non-emission, and the high intensity is greater than the low intensity.

In some embodiments, the detected group includes at least a previous group, and determining whether the detected group has encountered the high-reflectivity obstacle based on the detection results of the multiple detectors includes: when feature information of at least one of the detection results is greater than a predetermined high-reflectivity threshold in the detection results of the previous group, determining that the previous group has encountered the high-reflectivity obstacle, otherwise, determining that the previous group has not encountered the high-reflectivity obstacle.

In some embodiments, the feature information includes at least one of intensity, amplitude, and reflectivity.

In some embodiments, determining the emission strategy for the next group of lasers based on whether the detected group has encountered the high-reflectivity obstacle and the light intensity of the emitted lasers includes: when determining that the detected group has encountered the high-reflectivity obstacle, using a different emission strategy from the previous group for the next group of lasers based on the light intensity of the emitted lasers ; or when determining that the detected group has not encountered the high-reflectivity obstacle, using a predetermined emission strategy for the next group of lasers based on the light intensity of the emitted lasers.

In some embodiments, when determining that the detected group has encountered the high-reflectivity obstacle, using the different emission strategy from the previous group for the next group of lasers based on the light intensity of the emitted lasers includes: determining a high-reflectivity area in the previous group, where the high-reflectivity area includes an area covered by the high-reflectivity obstacle and an area affected by crosstalk from a reflection signal of the high-reflectivity obstacle; and using a different emission strategy from the previous group for lasers adjacent to the high-reflectivity area within the next group based on the light intensity of the emitted lasers.

In some embodiments, determining the high-reflectivity area in the previous group includes: determining a detection channel within the previous group where the feature information of detection result is greater than the high-reflectivity threshold as the high-reflectivity area.

In some embodiments, using the different emission strategy from the previous group for the detection channels adjacent to the high-reflectivity area within the next group based on the light intensity of the emitted lasers includes one of the following situations: when the emission strategy of the previous group is the high intensity, determining the light intensity of the detection channels adjacent to the high-reflectivity area within the next group as the low intensity; or when the emission strategy of the previous group is the low intensity, determining the light intensity of the detection channels adjacent to the high-reflectivity area within the next group as the non-emission.

In some embodiments, when determining that the detected group has encountered the high-reflectivity obstacle, using the different emission strategy from the previous group for the next group of lasers based on the light intensity of the emitted lasers includes: using the high intensity to emit light for the detection channels that are not adjacent to the high-reflectivity area within the next group.

In some embodiments, when the light intensity of the previous group is not the non-emission, the predetermined emission strategy includes the light intensity of all detection channels being the high intensity.

In some embodiments, when the light intensity of the previous group includes the non-emission, the predetermined emission strategy includes the light intensity of detection channels adjacent to non-emission detection channels being the low intensity, and the light intensity of other detection channels being the high intensity.

In some embodiments, the method for detection of the LiDAR further includes: processing unreliable detection results to determine corresponding correction signals, where the unreliable detection results include at least one of: a detection result corresponding to a detection channel with the light intensity being the low intensity and located outside the high-reflectivity area; a detection result corresponding to a detection channel with the light intensity being the non-emission; and a detection result corresponding to a detection channel with the light intensity being the non-emission, and a detection result corresponding to a detection channel within a group where the light intensity of at least one detection channel is the high intensity and located inside the high-reflectivity area.

In some embodiments, determining the corresponding correction signals includes at least one of: re-detecting based on the unreliable detection results to determine the correction signals; and fusing features of detection results of other detection channels adjacent to detection channels corresponding to the unreliable detection results to determine the correction signals.

In some embodiments, fusing features includes at least one of weighted summing, averaging, pooling, and interpolating.

In some embodiments, emitting light in parallel includes detection of multiple detection channels within the group is completed within a same time window.

In a second aspect, this specification further provides a system for detection of a LiDAR, including: at least one storage medium configured to store at least one instruction set for LiDAR detection; and at least one processor communicatively coupled to the at least one storage medium, where when the system for the LiDAR is in operation, the at least one processor is configured to read the at least one instruction set and implement the detection method for the LiDAR based on any one of claims 1 to 17.

In a third aspect, this specification further provides a LiDAR, including: multiple lasers configured to emit an optical signal outward during operation; multiple detectors configured to receive an detection echo reflected by an obstacle during operation, where the multiple lasers and the multiple detectors form multiple detection channels; a controller apparatus communicatively coupled to the multiple lasers and the multiple detectors during operation, configured to divide all of the multiple lasers into multiple groups for polling light emission, with lasers in each group emitting light in parallel; detect an echo using the multiple detectors; determine an emission strategy for a next group of lasers configured to emit light in parallel based on detection results of the plurality of detectors and a light intensity of emitted lasers, where the emission strategy allows lasers emitted in parallel to have different light intensities; and control the next group of lasers to emit light based on the emission strategy.

From the above technical solutions, it can be seen that in the method, and system for detection of the LiDAR and the LiDAR provided in this specification, the multiple lasers are divided into the multiple groups, with the lasers in each group emitting light in parallel, and the multiple detectors are used to detect the echoes. Then, based on the detection results of the multiple detectors and the light intensity of the emitted lasers, the emission strategy for the next group of lasers that can emit the light in parallel is determined, and the emission strategy allows the laser light emitted in parallel to have different light intensities. And then the next group of lasers is controlled to emit the light based on the emission strategy. During a detection process, this solution can determine the emission strategy for the next group based on the detection results and the light intensity of the emitted lasers to adjust the emission strategy dynamically, which can suppress the crosstalk from the high-reflectivity obstacle to other detection channels by reducing the light intensity of detection channels covered by the high-reflectivity obstacle. Meanwhile, for detection channels not covered by the high-reflectivity obstacle, optical signals with the high intensity can continue to be used to maintain ranging capability of the LiDAR, which can further improve detection accuracy of the LiDAR.

Other functions of the method, and system for detection of the LiDAR, and the LiDAR provided in this specification can be partially listed in the following illustration. Based on the description, the following numbers and examples are obvious for those ordinary skilled in the art. Creative aspects of the method, and system for detection of the LiDAR, and the LiDAR provided in this specification can be fully explained through practice or use of the methods, apparatuses, and combinations in the detailed examples below.

### BRIEF DESCRIPTION OF THE DRAWINGS

To describe technical solutions in embodiments of this specification more clearly, drawings to be used in the embodiments can be briefly introduced below, and it is apparent that the drawings described below are only some of the embodiments of this specification, and that other drawings may also be determined based on these drawings for those ordinary skilled in the art without creative labor.
Fig. 1 shows a schematic structural diagram of a LiDAR, provided in some embodiments of this specification.
Fig. 2 shows a schematic diagram of distribution of LiDAR beams in a vertical field of view, provided in some embodiments of this specification.
Fig. 3 shows a schematic diagram of distribution of multiple lasers, provided in some embodiments of this specification.
Fig. 4 shows an illustrative flowchart of a method for detection of a LiDAR, provided in some embodiments of this specification.
Fig. 5 shows a schematic operation diagram of a LiDAR when detecting, provided in some embodiments of this specification.
Fig. 6 shows an illustrative flowchart of each detection, provided in some embodiments of this specification.
Fig. 7A shows a schematic diagram of a detection result corresponding to an optical signal with low intensity, provided in some embodiments of this specification.
Fig. 7B shows a schematic diagram of another detection result corresponding to an optical signal with low intensity, provided in some embodiments of this specification.
Fig. 8A shows a schematic diagram of a detection result corresponding to an optical signal with high intensity, provided in some embodiments of this specification.
Fig. 8B shows a schematic diagram of another detection result corresponding to an optical signal with high intensity, provided in some embodiments of this specification.
Fig. 8C shows a schematic diagram of another detection result corresponding to an optical signal with high intensity, provided in some embodiments of this specification. and
Fig. 9 shows a schematic diagram of light intensity, provided in some embodiments of this specification.
Fig. 10 shows a schematic diagram of an illustrative hardware of a system for detection of a LiDAR, provided in some embodiments of this specification.

### DETAILED DESCRIPTION

The following description provides specific application scenarios and requirements for this specification, with a purpose of enabling those skilled in the art to manufacture and use contents of this specification. For those skilled in the art, various partial modifications to disclosed embodiments are obvious, and general principles defined herein may be applied to other embodiments and applications without departing from spirit and scope of this specification. In such a case, this specification is not limited to shown embodiments, but is a widest scope consistent with the claims.

Terms used herein are only for the purpose of describing specific illustrative embodiments rather than restrictive. For example, unless otherwise explicitly stated in the context, singular forms "a," "one," and "this" used herein may also include plural forms. When used in this specification, at least one of terms "including," "comprising," and "containing" refers that at least one of associated integers, steps, operations, elements, and components exists, but do not exclude existence of at least one of one or more other features, integers, steps, operations, elements, components, and groups or that at least one of other features, integers, steps, operations, elements, components, and groups may be added to the system/method.

Considering the following description, these features and other features of this specification, as well as operations and functions of relevant elements of a structure, and combination of components and manufacturing economy, may be significantly improved. Referring to drawings, all of which form a part of this specification. However, it should be clearly understood that the drawings are only for illustrative and descriptive purposes and are not intended to limit a scope of this specification. It should also be understood that the drawings are not drawn to scale.

A flowchart used in this specification illustrates operations implemented by a system based on some embodiments in this specification. It should be clearly understood that operations in the flowchart may be implemented out of order. On the contrary, the operations may be implemented in a reverse order or simultaneously. In addition, one or more other operations may be added to the flowchart. One or more operations may be removed from the flowchart.

For the convenience of illustration, explanations of terms that may appear in the following description are provided as following.

Optical crosstalk: detector in each channel of a LiDAR can receive reflected light from other channels that have encountered obstacle. When an intensity of reflected light received from other channels reaches a certain level, an interference signal can be generated in a detection result received by the detector, which can be superimposed with a reflection signal formed by a real obstacle in the current channel. Two signals cannot be distinguished. And when a subsequent processor uses a superimposed signal as a basis for calculating distance and reflectivity, a calculation result can be inaccurate, leading to a deviation between measured distance and reflectivity and actual distance and reflectivity of the obstacle, which can affect ranging accuracy. Optical crosstalk is a primary factor affecting detection accuracy of the LiDAR, and it often occurs in scenarios where high-reflectivity obstacle are present at close range.

Electrical crosstalk: when multiple channels of the LiDAR process electrical signals in parallel, a signal from a channel with a stronger electrical signal can directly cause crosstalk to other receiving channels through a circuit, generating an interference signal.

High-reflectivity obstacle: that is an obstacle with high reflectivity. Energy of reflected light reflected by the high-reflectivity obstacle is extremely strong. A road sign is a typical high-reflectivity obstacle, and its surface includes multiple tiny retroreflectors that can return incident light to its source with extremely high reflected energy. The road sign is a common obstacle encountered by LiDAR in autonomous driving applications.

Ghost image: when a high-reflectivity obstacle (such as a highway road sign) is present in application scenario of the LiDAR, and when channel 1 encounters the high-reflectivity obstacle in its detection direction, generating a very strong reflection signal, channel 2 adjacent to channel 1 can receive the reflection signal generated by the high-reflectivity obstacle in channel 1, which can generate an interference signal in channel 2. When there are no obstacle in channel 2, the channel 2, affected by optical crosstalk, can misinterpret the interference signal as a reflection signal from its own detection direction, leading to a distance calculation. Channel 2 can falsely detect an object at a position in channel 2 where there is no obstacle, resulting in a ghost image in a point cloud.

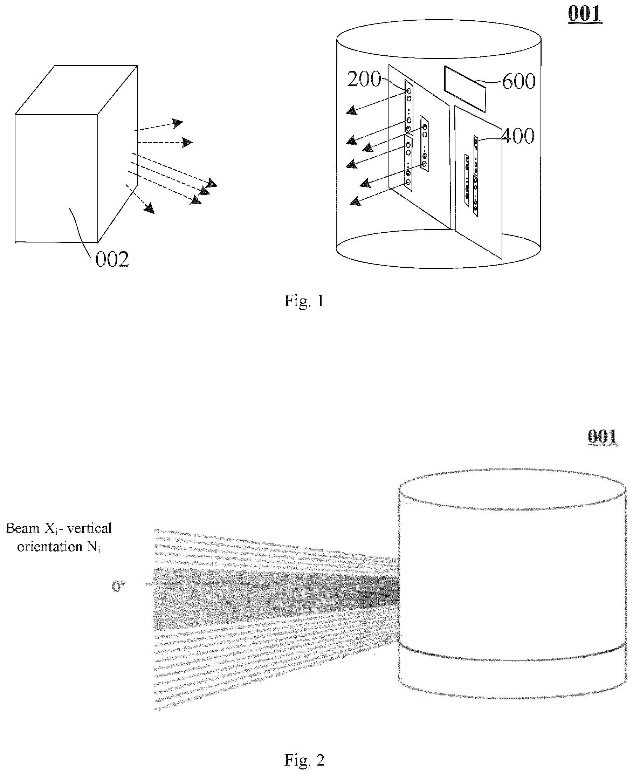

Fig. 1 is a schematic structural diagram of a LiDAR 001, provided in some embodiments of this specification. The LiDAR 001 is a LiDAR system that detects position, velocity, and other features of an obstacle 002 by emitting a laser beam. Its operation principle is to emit the laser beam (optical signal) towards an obstacle, and then compare a received detection result (reflection signal or echo signal) reflected by the obstacle 002 with the optical signal. After processing appropriately, information about the obstacle can be determined, such as distance, orientation, altitude, velocity, attitude, and even shape and other parameters of the obstacle relative to the LiDAR 001, which can detect, track, and identify the obstacle. The LiDAR 001 can emit a laser signal outward during operation and receive a reflection signal reflected by the obstacle, which can generate point cloud data. A frame of the point cloud data can include multiple laser spot data. Each laser spot data includes three-dimensional coordinate information of X, Y, and Z. The obstacle 002 can be any type of object near the LiDAR 001. For example, in an autonomous driving scenario, the obstacle 002 can be a vehicle, building, pedestrian, or the like near the LiDAR 001. For another example, in a 3D scanning scenario, the obstacle 002 can be any type of building in a scenario where the LiDAR 001 is located. As shown in Fig. 1, the LiDAR 001 can include multiple lasers 200, multiple detectors 400, and a controller apparatus 600. The controller apparatus herein can also be an apparatus integrated with a system for detection of a LiDAR.

A laser 200 can emit an optical signal outward periodically during operation. The optical signal can be a beam of laser signal. Based on the number of beams of laser signal, the LiDAR 001 can usually be divided into single-line LiDAR, 4-line LiDAR, 8/16/32/64/128-line LiDAR, or the like. In this specification, the LiDAR 001 being a multi-line LiDAR is taken as an example to describe. Multiple beams of laser signal are emitted at different angles in a vertical direction and scanned horizontally to detect a three-dimensional contour of a target area. Multiple beams of laser signal correspond to multiple inclined scanning planes. In such a case, the more beams of laser signal in a vertical field of view, the higher the angular resolution in the vertical direction and the higher the density of laser point cloud.

A detector 400 can receive the reflection signal of the optical signal reflected by the obstacle 002 or the detection result. When the laser signal encounters the obstacle 002, and is diffusely reflected by the obstacle 002, the reflection signal or the detection result can be formed, which is received by the detector 400.

Each laser 200 corresponds to an emitting channel. Each detector 400 corresponds to an receiving channel. An emitting channel and a receiving channel form a detection channel. The laser signal beams emitted by the multiple lasers 200 of the LiDAR 001 are deflected by an emitting lens (group) of the emitted laser signal beams, and are directed in different directions when emitted from the LiDAR 001. Each detection channel is responsible for detection in a vertical orientation direction. The vertical orientation direction can be a direction within a vertical plane parallel to a rotation shaft of the LiDAR 001. A horizontal orientation direction can be a direction within a horizontal plane perpendicular to the rotation shaft of the LiDAR 001.

For the multi-line LiDAR, the multiple lasers 200 emit multiple laser signal beams as light-emitter uinits. The multiple laser signal beams can be distributed non-uniformly in the vertical field of view of the LiDAR 001, that is, spacing between all laser signal beams in the vertical direction is not completely consistent. Since there is a transceiver correspondence between a laser 200 and a detector 400, the corresponding laser 200 and detector 400 can have at least partially overlapping fields of view. That is, the laser signal emitted by the laser 200 falls on a certain area of the obstacle 002, and the optical signal reflected from the area can at least partially return to the detector 400. The detectors 400 are also set to lay out in similar manner to the lasers 200, which can achieve that the resolution of all beams or the entire point cloud in the vertical direction is not completely consistent, that is, non-uniform distribution. This is called the non-uniform distribution of beams (also known as light beams or point clouds). For a multi-line LiDAR 001, a laser signal beam is a scanning beam. The number of scanning beams is the number of detection channels used for receiving and emitting of the LiDAR 001, or the number of minimum addressable channels. In some embodiments, lasers 200 and detectors 200 are in a 1: 1 configuration, that is, the laser 200 corresponds one-to-one with the detector 400. The number of scanning beams is equal to the number of lasers 200 or detectors 400, as well as the number of emitting channels or receiving channels. In some embodiments, multiple detectors 400 share one laser 200, that is, lasers 200 and detectors 400 are in a 1: n configuration, where n is greater than 1. In some embodiments, multiple lasers 200 share one detector 400, that is, lasers 200 and detectors 200 are in an n: 1 configuration, where n is greater than 1. In some embodiments, the lasers 200 and the detectors 400 can be interlaced. At this point, the scanning beam can be determined by distinguishing the number of minimum addressable and activated channels.

For the convenience of description, a 1: 1 configuration of the lasers 200 and the detectors 200 is taken as an example to illustrate in the following description. That is, the laser 200 corresponds one-to-one with the detector 400. The multiple lasers 200 and the multiple detectors 200 form the multiple detection channels.

As mentioned earlier, the multiple laser signal beams are distributed non-uniformly in the vertical field of view of the LiDAR 001, that is, the spacing between all laser signal beams in the vertical direction is not completely consistent. Fig. 2 shows a schematic diagram of distribution of beams of a LiDAR 001 in a vertical field of view, provided in some embodiments of this specification. Fig. 2 shows a schematic diagram of Xᵢ detection channels or beams. Different numbers of detection channels correspond to the same or different ranges of vertical orientation. For example, when the number of detection channels is 40, the corresponding range of vertical orientation can be -16° - 7°. For the convenience of description, the 40 beams are labeled as beam 1, beam 2, beam 3..., beam 40, respectively. The 40 beams are distributed in a vertical orientation ranging from -16° to 7° within the vertical field of view, consisting of vertical orientations of all lasers 200. The density of the beams is higher in a center area and lower in two side areas. Laser 200 corresponds to beam 1 with a vertical orientation of 7°, and is responsible for distance detection in a 7° orientation. Laser 200 corresponds to beam 40 with a vertical angle of -16°, and is responsible for distance detection in a -16° orientation. It should be noted that this is only an example. In a specific implementation, there can be different numbers of beams and vertical orientation ranges. Even the same number of beams can cover different vertical orientation ranges.

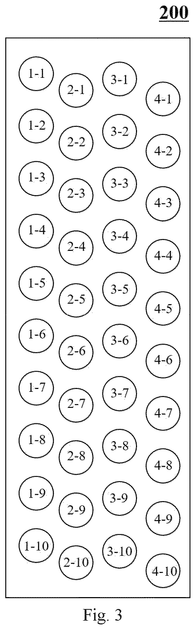

Fig. 3 shows a schematic diagram of distribution of multiple lasers 200, provided in some embodiments of this specification. Fig 3 shows 40 lasers 200. The 40 lasers 200 can be distributed in any array, such as a square array, a circular array, a linear array, or the like. In the schematic diagram shown in Fig. 3, the 40 lasers 200 are distributed in the square array, divided into 10 rows and 4 columns. Each column of lasers 200 can be referred to as a linear array of lasers 200. Each linear array of lasers 200 can include multiple lasers 200 arranged in a vertical direction. Lasers 200 in at least two linear arrays of lasers 200 are partially interlaced in the vertical direction, forming a dense area in the center area as shown in Fig. 2. 1-1 represents a laser 200 located in column 1, row 1, 1-2 represents a laser 200 located in column 1, row 2, 4-1 represents a laser 200 located in column 4, row 1, and so on.

In the detection of LiDAR, the resolution or the frequency of the point cloud can be improved by adding parallel detection channels. In the LiDAR 001 as shown in Fig. 3, when the number of parallel detection channels in a single detection is 8, data of 8 laser spots can be generated in single detection time. When the number of parallel detection channels in a single detection is 20, data of 20 laser spots can be generated in the single detection time.

A controller apparatus 600 can store data or instructions for performing the method for detection of a LiDAR described in this specification and can execute or be used to execute the data and/or instructions. A system of controller apparatus 600 can include a hardware device with data information processing functions and a necessary program required to drive the operation of the hardware device. Of course, the controller apparatus 600 can also be just a hardware device with data processing functions, or just a program operation in the hardware device. The controller apparatus 600 can be communicatively couple to the multiple lasers 200 and the multiple detectors 200 during operation. The controller apparatus 600 can perform ranging based on the method for detection of the LiDAR described in this specification during operation. Specifically, the controller apparatus 600 can divide all of the multiple lasers into multiple groups, with lasers in each group emitting light in parallel, detect echoes of lasers generated by lasers emitting in parallel using multiple detectors, determine an emission strategy for a next group of lasers that can be emitted in parallel based on detection results of the multiple detectors and light intensity of the lasers emitted in parallel, where the emission strategy allows the lasers emitted in parallel to have different light intensities, and control the next group to emit light based on the emission strategy. The emitting light in parallel refers that multiple channels complete signal emission and echo reception within a time window. The channels can overlap with each other in emission times, but do not necessarily need to emit or receive light simultaneously. To complete a detection of distance between an obstacle and a radar, light can be emitted by a laser at a moment t1 and return when encountering the obstacle at predetermined farthest distance dmax that can be detected by the radar, an echo is received by a detector at t2, and a time window ≈ dmax/2C (C is speed of light) ≈ t2 - t1.

The communicativelly coupled refers to any form of connection that can receive information directly or indirectly. In some embodiments, the controller apparatus 600 can exchange data with the multiple lasers 200 and the multiple detectors 200 via wireless communication connection. In some embodiments, the controller apparatus 600 can also exchange date with the multiple lasers 200 and the multiple detectors 200 via directly wire connection. In some embodiments, the controller apparatus 600 can also establish indirect connection to the multiple lasers 200 and the multiple detectors 200 by directly connected to other circuits via wires, which can enable data exchange. The wireless communication connection can be a network connection, Bluetooth connection, NFC connection, or the like.

In some embodiments, the controller apparatus 600 can be local or remote. In some embodiments, the controller apparatus 600 can operate on a cloud platform. In some embodiments, the controller apparatus 600 can access data from the multiple lasers 200 and the multiple detectors 200 through a network. In some embodiments, the controller apparatus 600 can be directly connected to the multiple lasers 200 and the multiple detectors 200 to access data therein.

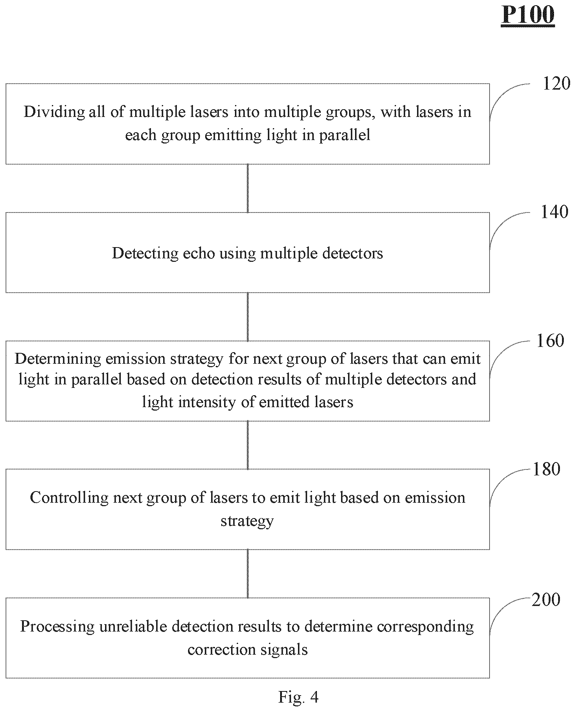

Fig. 4 shows an illustrative flowchart of a method for detection of a LiDAR P100, provided in some embodiments of this specification. As mentioned above, a system for detection of a LiDAR 600 can perform a method for detection of a LiDAR P100 described in this specification. In some embodiments, the LiDAR 001 can rotate about a rotation shaft in a horizontal orientation, enabling detection in different horizontal orientations. Alternatively, the LiDAR 001 can include a rotating component such as a rotating mirror, a galvanometer, a MEMS, or the like. Driven by the rotating component, horizontal scanning can be achived. The controller apparatus 600 can perform the method P100 in any one or more horizontal orientations of multiple horizontal orientations. That is, the controller apparatus 600 can perform the method P100 in at least one horizontal orientation of the LiDAR 001. In some embodiments, the at least one horizontal orientation can be a predetermined horizontal orientation. In some embodiments, the at least one horizontal orientation can be a random horizontal orientation. In some embodiments, the controller apparatus 600 can perform the method P100 in each horizontal orientation in the at least one horizontal orientation of the LiDAR 001. As shown in Fig. 4, the method P100 can include the following steps.

In S120, dividing the multiple lasers into multiple groups, with lasers within each group emitting light in parallel.

For example, a processor 620 can determine multiple detection channels in a current horizontal orientation, and each detection channel includes one laser and one detector. The multiple detection channels are divided into multiple groups, enabling division of the multiple lasers into the multiple groups, with the lasers within each group emitting light in parallel. Specific embodiments can be as follows.

In S121, determining multiple detection channels in the current horizontal orientation.

As mentioned above, the LiDAR 001 is the multi-line LiDAR. In some embodiments, all detection channels in the LiDAR 001 can be selected to detect in the current horizontal orientation. In some embodiments, a portion of detection channels in the LiDAR 001 can be selected to detect in the current horizontal orientation. The number of detection channels in the LiDAR can be N, where N is any positive integer. For example, 40, 60, 80, 128, or the like. In some embodiments, the multiple detection channels can be predetermined detection channels. In some embodiments, the multiple detection channels can be detection channels selected randomly. In some embodiments, the multiple detection channels are related to the horizontal orientation of the LiDAR 001. At different horizontal orientations, same detection channels can be selected to detect, or different detection channels can be selected to detect. In some embodiments, the multiple detection channels are related to an installation angle of the LiDAR 001, where the installation angle can be interpreted as an angle between the LiDAR and the horizontal plane or a certain installation plane. At different installation angles, same detection channels can be selected to detect, or different detection channels can be selected to detect.

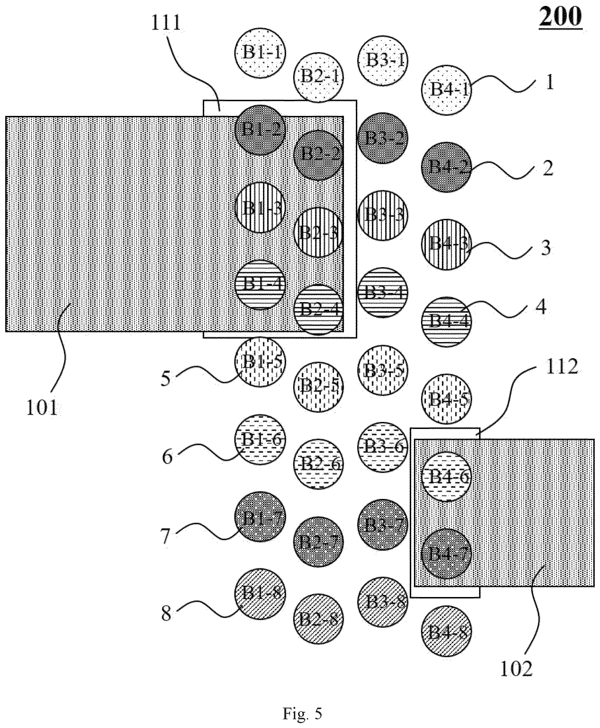

Fig. 5 shows a schematic operation diagram of a LiDAR 001 when detecting, provided in some embodiments of this specification. As shown in Fig. 5, N being 32 is taken as an example for the description. In the current horizontal orientation, a total of 32 lasers are used to detect. Specifically, the 32 lasers are divided into 8 groups, with 4 lasers within each group. The groups emit light in a relative polling sequence, while the 4 lasers within each group emit light in parallel. In addition, a same background color filling in Fig. 5 can be interpreted as parallel emission within the detection channels. For the convenience of description, the selected 32 detection channels in a form of an 8-row and 4-column array are taken as an example, as shown in Fig. 5 specifically. Those skilled in the art should understand that other numbers of detection channels and other array forms are within a protection scope of this specification. And the detection channels of each column are interlaced in the vertical direction. For the convenience of illustration, a detection channel in column i and row j is labeled as Bi-j. For example, a detection channel in the first row and the first column is labeled B1-1, a detection channel in the second column and the second row is labeled B2-2, and so on. Fig. 5 exemplarily illustrates two high-reflectivity obstacle, a high-reflectivity obstacle 101 and a high-reflectivity obstacle 102, respectively. And a high crosstalk area 111 is an area covered by the high-reflectivity obstacle 101 in multiple detection channels. A high crosstalk area 112 is an area covered by the high-reflectivity obstacle 102 in multiple detection channels.

In S122, dividing the multiple detection channels into multiple groups.

The number of groups into which the detection channels are divided can be M, where M is any positive integer not greater than N. Each group of the multiple groups includes at least one detection channel. In some embodiments, the number of M can be related to rotation speed of the LiDAR 001. The higher the rotation speed of the LiDAR 001, the smaller the number of M. In some embodiments, the number of M can be related to detection distance of the LiDAR 001. The farther the detection distance of the LiDAR 001, the smaller the number of M.

In some embodiments, the processor 620 can divide the multiple detection channels into the multiple groups based on positions of the multiple detection channels. In some embodiments, a position of a detection channel in each group can be greater than a certain threshold to reduce the optical crosstalk between adjacent detection channels in a same group. In some embodiments, detection channels in each group can be in different columns. Taking the detection channels shown in Fig. 5 as an example, the method P100 can divide the 32 detection channels in 8 rows and 4 columns into the 8 groups, each group can include 4 detection channels, and the 4 detection channels in each group can be arranged in a same row. As shown in Fig. 5, for the convenience of illustration, detection channels in the same group are labeled with the same background filling. For example, detection channels B1-1, B2-1, B3-1, and B4-1 are in a group. In some embodiments, step S140 can further divide the multiple detection channels based on other methods, such as a random method, or the like. The number of detection channels in different groups can be the same or different.

When the detection channels are divided into the multiple groups, each group of detection channels includes at least one laser, enabling the division of the multiple lasers into the multiple groups, with each group of lasers corresponding to each group of detection channels. When divided the lasers into groups, each group of lasers can include at least one laser. In each group of lasers, the lasers in the group can emit light in parallel. The emit light in parallel refers that the detection of the multiple detection channels in the group is completed within a same time window. It can also be interpreted that each laser in each group can emit light independently and asynchronously. During emission, the light intensity of each group of lasers can be the same or different. Specifically, each group of lasers can emit light based on the emission strategy, and emit light simultaneously in an emission time sequence.

As shown in Fig. 4, the method P100 can further include the following.

In S140, detecting an echo using the multiple detectors.

The echo can be a return signal generated when laser emitted by a detector corresponding to a detection channel encounters an obstacle.

Specifically, the multiple detection channels in the current horizontal orientation can be divided into the multiple groups based on step S120, and the detectors in the multiple groups of detection channels can be used for M detections to detect echoes of lasers emitted in parallel by lasers. The detectors within the multiple groups of detection channels correspond one-to-one with the M detections. That is, in the current horizontal orientation, the detectors within the multiple detection channels that need to be used for detection can take turns to detect in M cycles based on the multiple groups, rather than all detection channels detecting in parallel at once. During each detection, the detectors in one of the multiple groups of detection channels are used. As shown in Fig. 5, the 32 detection channels are divided into the 8 groups. The 4 detection channels in each group are used as one group to detect the echoes of the lasers emitted in parallel by the lasers. The 8 groups can detect in sequence until all groups have completed detection.

In some embodiments, step S140 can be that the multiple groups sequentially use the multiple detectors to detect the echoes of the lasers emitted in parallel by the lasers based on a predetermined order, until the multiple detectors in the multiple groups of detection channels have completed the M detections. The predetermined order can include an order of vertical orientations corresponding to the multiple groups of detection channels. Vertical orientations of groups corresponding to two adjacent detections are adjacent. As mentioned above, in some embodiments, in step S120, the method P100 can divide the multiple detection channels into the multiple groups. Each group is responsible for a different vertical orientation range. In step S140, the method P100 can sequencially use the multiple groups to detect based on the vertical orientation corresponding to the detection channel in each of the multiple groups. For example, an order of vertical orientation from largest to smallest or from smallest to largest can be based on. As mentioned above, in some embodiments, in step S120, the method P100 can divide the multiple detection channels into the multiple groups based on positions of the detection channels. In step S140, the method P100 can sequencially use the multiple groups to detect based on a position order of the multiple groups. For example, an order of group from top to bottom or from bottom to top, for another example, an order of detection channels from left to right or from right to left can be based on, and so on.

For the convenience of illustration, the 8 groups as shown in Fig. 5 are defined as Group 1, Group 2..., and Group 8 in sequence from top to bottom. For the convenience of illustration, an example of detections of the 8 groups in sequence from top to bottom as shown in Fig. 5 is provided for the description.

Step S140 can be carried out through multiple detection cycles. Based on a result of each detection, an orientation (including horizontal and vertical orientations) of the detection channel affected by the optical crosstalk can be determined, which allows for quick localization of high-reflectivity obstacle, to determine an area and a detection channel covered by the high-reflectivity obstacle. An intensity of optical signal of the detection channel covered by the high-reflectivity obstacle can be controlled, and a light intensity of the detection channel corresponding to the high-reflectivity obstacle can be reduced, which can suppress the crosstalk and efficiently mitigate the phenomenon. And detection channels not covered by the high-reflectivity obstacle can continue to detect at high light intensity and maintain a ranging capability.

During a process of detecting the echoes of the lasers emitted in parallel by the lasers using the multiple detectors, for each detection, all detection channels corresponding to the current detection are detected in parallel.

For example, during each detection, all detection channels within the group corresponding to the detection are used to emit light in parallel to detect. For example, during a first detection, the detection channels B1-1, B2-1, B3-1, and B4-1 within the Group 1 are all used to emit light in parallel to detect, and so on.

After detection of the current group, the emission strategy of lasers light in the next group of detection channels that can emit the light in parallel can be determined based on the detection result of the current group and the light intensity of the lasers emitted in parallel. In such a case, the method P100 can further include the following.

In S160, determining an emission strategy for a next group of lasers that can emit light in parallel based on detection results of the multiple detectors and light intensity of emitted lasers.

The detection result can be the reflection signal received by the detector 400, or it can be interpreted as a result of detecting the echoes of the lasers emitted in parallel by the lasers.

The emission strategy allows the lasers emitted in parallel to have different light intensities, that is, in each detection process, each laser within the group of lasers can emit the lasers with different light intensities in parallel. The emission strategy can be interpleted as strategy information of emission of the lasers within each group of detection channels during the detection process. The emission strategy can include the light intensity and/or a relative time sequence of the emission of the multiple detection channels within the group.

In some embodiments, the light intensity can include one of high intensity, low intensity, and non-emission. The non-emission means that the detection channel is not operating, the laser 200 has no optical signal, and corresponding detector 400 does not receive the detection result. The high intensity is greater than the low intensity. The high intensity can be the light intensity greater than an intensity threshold. The low intensity can be the light intensity less than the intensity threshold. The intensity threshold can be a numerical value or a range of numerical values. The intensity threshold can be determined based on experience, experimental statistics, or machine learning. In some embodiments, the intensity threshold is related to the vertical resolution of the LiDAR 001. The greater the vertical resolution, the lower the angular difference between the adjacent detection channels, that is, the distance between the adjacent detection channels is closer, making the adjacent detection channels more susceptible to the optical crosstalk. In such a case, the intensity threshold is lower. Conversely, the intensity threshold is higher. In some embodiments, the intensity threshold is related to expected detection distance of the LiDAR 001. The closer the detection distance, the greater the intensity of the echo signal, which is more likely to cause the optical crosstalk to other channels. In such a case, the intensity threshold is lower. Conversely, the intensity threshold is higher.

There are various ways to determine the emission strategy for the next group of lasers that can emit light in parallel based on the detection results of the multiple detectors and the light intensity of the emitted lasers. Specific embodiments can be as follows.

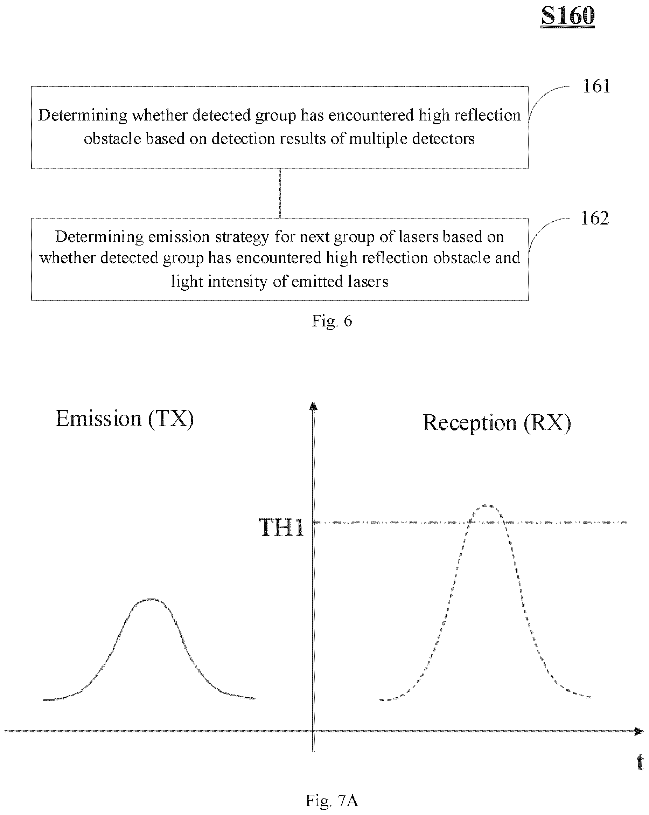

For example, whether a detected group has encountered the high-reflectivity obstacle can be determined based on the detection results of the multiple detectors. The emission strategy for the next group of lasers can be determined based on whether the detected group has encountered the high-reflectivity obstacle and the light intensity of the emitted lasers. Specific embodiments can be shown in Fig. 6.

In S161, determining whether the detected group has encountered the high-reflectivity obstacle based on the detection results of the multiple detectors.

The high-reflectivity obstacle includes an object with a reflectivity exceeding a predetermined reflectivity threshold.

The detected group includes at least a previous group, which can be interpreted as a group that has been detected before the current group and is adjacent to the current group. There are various ways to determine whether the detected group has encountered the high-reflectivity obstacle based on the detection results of the multiple detectors. Specific embodiments can be as follows.

For example, in detection results of the previous group, when feature information of at least one of the detection results is greater than a predetermined high-reflectivity threshold, it can be determined that the previous group has encounter the high-reflectivity obstacle. Otherwise, it can be determined that the previous group hss not encountered the high-reflectivity obstacle.

In step S161, the controller apparatus 600 can determine whether the detection channels within the previous group have encountered the high-reflectivity obstacle based on the emitted light intensity and the received detection results of the detection channels within the previous group. As mentioned above, reflected energy by the high-reflectivity obstacle is extremely strong. The reflected signals by the high-reflectivity obstacle can not only be received by the detection channels corresponding to the reflection signals, but also by adjacent detection channels, which can cause the optical crosstalk to the adjacent detection channels. For the convenience of description, a signal reflected from the high-reflectivity obstacle is defined as a high-reflectivity signal. In some embodiments, feature information of the high-reflectivity signal is greater than a filtering threshold of a noise signal. The feature information can include at least one of intensity, amplitude, and reflectivity. The filtering threshold of the noise signal can be a threshold for filtering the noise signal from the detection result. When the detector 400 receives the detection result, it can not only receive the reflection signal reflected by the obstacle 002, but also receive the noise signal. The feature information of the noise signal is less than that of the reflection signal of the obstacle 002, and even less than that of the high-reflectivity signal. When the feature information of the detection result is less than the filtering threshold of the noise signal, the detection result can be determined as the noise signal. In such a case, a feature signal of the high-reflectivity signal is greater than the filtering threshold of the noise signal. For the convenience of illustration, the filtering threshold of the noise signal is labeled as TH0.

It should be noted that when the light intensity is different, the high-reflectivity signals reflected by the high-reflectivity obstacle are different, and corresponding feature information is also different. For example, the higher the light intensity, the greater the feature information of the high-reflectivity signal reflected by the high-reflectivity obstacle. In such a case, method for determining whether the high-reflectivity signal is present in the detection results varies depending on the intensities of the optical signals. In such a case, the controller apparatus 600 can analyze the intensity of the detection result based on the light intensity of the current detection channel and the received detection result to determine whether the current detection channel has encountered the high-reflectivity obstacle.

When the optical signal with the high intensity of the detection channel incidents on the high-reflectivity obstacle, a signal reflected by the high-reflectivity obstacle can also be determined as the high-reflectivity signal when received by the adjacent detection channels. At this time, the high-reflectivity signal is present in the detection result received by the adjacent detection channels. When the optical signal with the low intensity of the detection channel incidents on the high-reflectivity obstacle, a signal reflected by the high-reflectivity obstacle will not be determined as the high-reflectivity signal when received by the adjacent detection channels. At this time, no high-reflectivity signal is present in the detection result received by the adjacent detection channels.

In some embodiments, the current detection channel encountering the high-reflectivity obstacle can include the presence of the high-reflectivity obstacle in an orientation (including vertical and horizontal orientations) covered by the current detection channel. In some embodiments, the current detection channel encountering the high-reflectivity obstacle can further include a scenario where no high-reflectivity obstacle exists in the orientation (including the vertical and horizontal orientations) covered by the current detection channel, but the high-reflectivity obstacle is present in an adjacent detection channel, and the high-reflectivity signal reflected by the high-reflectivity obstacle is received by the current detection channel, causing the optical crosstalk to the current detection channel. It should be noted herein that when any of detection channels emitting in parallel encountering the high-reflectivity obstacle, the echo signal of the detection channel encountering the high-reflectivity obstacle can be extremely strong, which can further cause the crosstalk to other detection channels, resulting in the optical crosstalk in other detection channels. For the convenience of illustration, whether the current detection channel has encountered the high-reflectivity obstacle can be defined by a degree of the optical crosstalk. The degree of the optical crosstalk can include one of a high crosstalk and a non-high crosstalk. The high crosstalk can include the presence of the high-reflectivity signal reflected by the high-reflectivity obstacle in the detection result. The high-reflectivity signal can be a signal reflected by the high-reflectivity obstacle in the current detection channel, or a high-reflectivity signal reflected by the high-reflectivity obstacle in the detection channels adjacent to the current detection channel, and received by the current detection channel.

In summary, step S161 can determine whether the high-reflectivity signal is present in each detection channel based on the light intensity and the detection result of each detection channel within the previous group, and further determine the degree of the optical crosstalk in each detection channel. As mentioned above, the feature information can include at least one of intensity, amplitude, and reflectivity. A difference in the intensity, the amplitude, and the reflectivity between the high-reflectivity signal and the non-high-reflectivity signal is significant. Step S161 can determine whether the high-reflectivity signal is present in the detection result by setting a threshold based on at least one of the intensity, the amplitude, and the reflectivity of the detection result.

In some embodiments, step S161 can include that when the current detection channel is the low intensity and the feature information of the detection result is higher than a first threshold, determining that the high-reflectivity signal is present in the detection result received by the current detection channel.

In some embodiments, step S161 can include that when the current detection channel is the low intensity and the feature information of the detection result is lower than the first threshold, determining that no high-reflectivity signal is present in the detection result received by the current detection channel.

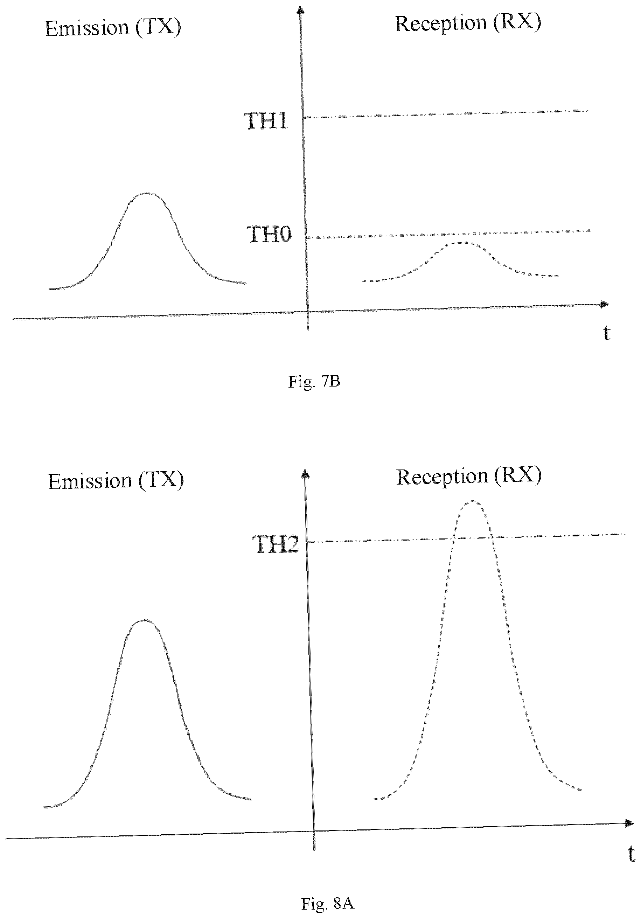

Fig. 7A shows a schematic diagram of a detection result corresponding to an optical signal with low intensity, provided in some embodiments of this specification. Fig. 7B shows a schematic diagram of another detection result corresponding to an optical signal with low intensity, provided in some embodiments of this specification. A solid line represents an emitted optical signal, and a dashed line represents a detection result. For the convenience of illustration, the first threshold is labeled as TH1. As shown in Fig. 7A, in a certain detection channel (i.e., the current detection channel), when the light intensity is the low intensity, and the high-reflectivity obstacle is present in the current detection channel, the high-reflectivity signal is present in the detection result received by the current detection channel. At this time, the feature information of the detection result can be higher than a first threshold TH1. Taking the feature information of the detection result as the intensity of the echo as an example, when the intensity of the echo exceeds the first threshold TH1, it can be determined that the current detection channel has encountered the high-reflectivity obstacle. The first threshold TH1 is higher than a filtering threshold TH0 of the noise signal. As shown in Fig. 7B, in a certain detection channel (i.e., the current detection channel), when the light intensity corresponding to the current detection channel is the low intensity, no high-reflectivity obstacle is present in the current detection channel, no high-reflectivity signal is present in the detection result received by the current detection channel. At this time, the feature information of the detection result can be lower than the first threshold TH1. As shown in Fig. 7B, in some embodiments, when no high-reflectivity obstacle is present, but a non-high-reflectivity obstacle is present in the current detection channel, that is, a conventional obstacle, the intensity of a reflection signal of the optical signal from the conventional obstacle is also the low intensity since the intensity of the optical signal is the low intensity, which can be lower than the filtering threshold TH0 of the noise signal. At this time, the radar can calculate the distance and the reflectivity subsequently based on the echo.

In some embodiments, step S161 can include that when the current detection channel is the high intensity and the feature information of the detection result is higher than a second threshold, determining that the high-reflectivity signal is present in the detection result received by the current detection channel.

In some embodiments, step S161 can include that when the current detection channel is the high intensity and the feature information of the detection result is lower than the second threshold, determining that no high-reflectivity signal is present in the detection result received by the current detection channel.

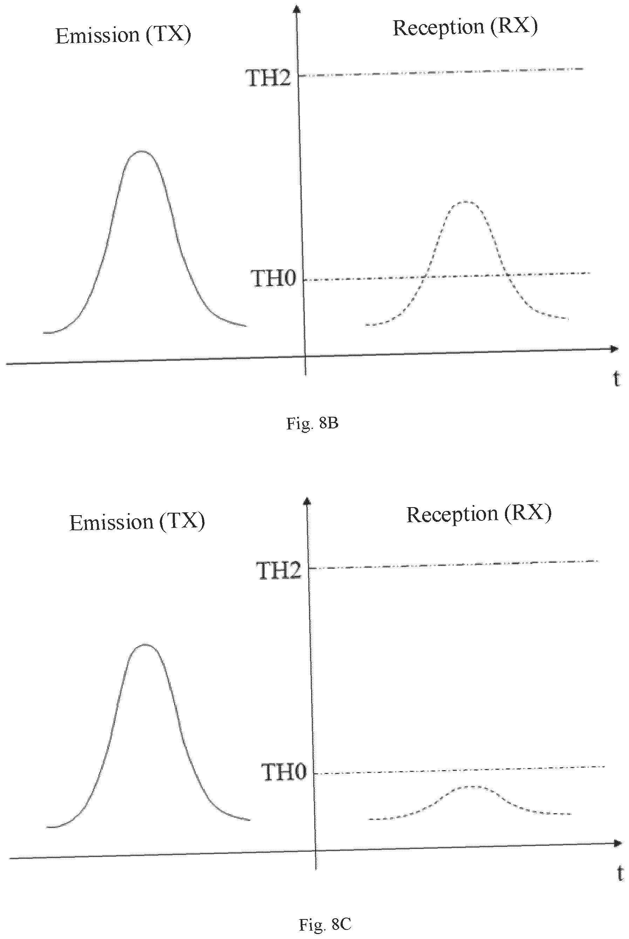

Fig. 8A shows a schematic diagram of a detection result corresponding to an optical signal with high intensity, provided in some embodiments of this specification. Fig. 8B shows a schematic diagram of another detection result corresponding to an optical signal with high intensity, provided in some embodiments of this specification. Fig. 8C shows a schematic diagram of another detection result corresponding to an optical signal with high intensity, provided in some embodiments of this specification. A solid line represents an emitted optical signal, and a dashed line represents a detection result. For the convenience of illustration, the second threshold is labeled as TH2. As shown in Fig. 8A, in a certain detection channel (i.e., the current detection channel), when the light intensity corresponding to the current detection channel is the high intensity, and the high-reflectivity obstacle is present in the current detection channel, the high-reflectivity signal is present in the detection result received by the current detection channel. At this time, the feature information of the detection result can be higher than a second threshold TH2. Taking the feature information of the detection result as the intensity or a peak value of the echo as an example, when the intensity of the echo exceeds the second threshold TH2, it can be determined that the current detection channel has encountered the high-reflectivity obstacle. The second threshold TH2 is higher than the filtering threshold TH0 of the noise signal. As shown in Fig. 8B and Fig. 8C, when the light intensity is the high intensity, and no high-reflectivity obstacle is present in the current detection channel, no high-reflectivity signal is present in the detection result received by the current detection channel. At this time, the feature information of the detection result can be lower than the second threshold TH2. As shown in Fig. 8B, in some embodiments, when no high-reflectivity obstacle is present in the current detection channel, but the non-high-reflectivity obstacle is present, that is, the conventional obstacle, then the feature information of the detection result received by the current detection channel can be lower than the second threshold TH2 and higher than the filtering threshold TH0 of the noise signal. Taking the feature information of the detection result as the intensity of the echo received by the current detection channel as an example, the intensity of the received echo is lower than the second threshold TH2 and higher than the threshold TH0 of the noise signal. As shown in Fig. 8C, when no obstacle is present in the current detection channel, the feature information of the detection result received by the current detection channel can be lower than the filtering threshold TH0 of the noise signal.

It should be noted that the feature information of the high-reflectivity signal of the optical signal with the high intensity and that of the high-reflectivity signal of the optical signal with the low intensity from the same high-reflectivity obstacle can be different or the same. In such a case, in some embodiments, the second threshold TH2 can be higher than the first threshold TH1. In some embodiments, the second threshold TH2 can be equal to the first threshold TH1.

In some embodiments, step S161 can include that when determining that the current detection channel is a channel that can cause the high crosstalk, its emission is disabled during the detection of the group. When the current detection channel does not emit light, it represents that the presence of the high-reflectivity obstacle in the detection channel in a current column has been determined in the previous detection. In such a case, to reduce the optical crosstalk to other channels, during the detection of this cycle/group, a detection channel to be emitted light in a same column as a previous column is disabled. In such a case, S161 determines the current detection channel as a detection channel of the high crosstalk.

As mentioned above, the controller apparatus 600 can pre-store the vertical orientation and the current horizontal orientation corresponding to each detection channel. In such a case, the controller apparatus 600 can determine a mapping table of detection channels that can cause the high crosstalk and corresponding orientations based on a result of step S161, that is, an orientation corresponding to each detection channel of the high crosstalk. The orientation includes the vertical orientation and the horizontal orientation.

In S162, determining the emission strategy for the next group of lasers based on whether the detected group has encountered the high-reflectivity obstacle and the light intensity of the emitted lasers.

The emission strategy for the next group of lasers is determined based on whether the detected group has encountered the high-reflectivity obstacle and the light intensity of the emitted lasers, so that the light intensity within the group used for each detection is adjusted to reduce the light intensity of the detection channel corresponding to the high-reflectivity obstacle, which can reduce the optical crosstalk. There are various ways to determine the emission strategy for the next group of lasers. Specific embodiments can be as follows.

For example, when determining that at least one of detected groups has encountered the high-reflectivity obstacle, a different emission strategy from the previous group can be used for the next group of lasers based on the light intensity of the emitted lasers. Alternatively, when determining that the detected group has not encountered the high-reflectivity obstacle, a predetermined emission strategy can be used for the next group of lasers based on the light intensity of the emitted lasers.

When determining that the detected group has encountered the high-reflectivity obstacle, there can be multiple ways to use the different emission strategy from the previous group for the next group of lasers based on the light intensity of the emitted lasers. For example, a high-reflectivity area in the previous group is determined, which includes an area covered by the high-reflectivity obstacle and an area affected by the crosstalk of a reflection signal of the high-reflectivity obstacle. And the different emission strategy from the previous group is used for detection channels adjacent to the high-reflectivity area within the next group based on the light intensity of the emitted lasers.

There are various ways to determine the high-reflectivity area in the previous group. For example, the detection channel within the previous group whose feature information of detection result is higher than a high-reflectivity threshold is determined as the high-reflectivity area.

When determining the high-reflectivity area, the different emission strategy from the previous group can be used for the detection channels adjacent to the high-reflectivity area within the next group based on the light intensity of the emitted lasers. There are multiple ways to determine the emission strategy, including one of the following situations. When the emission strategy for the previous group is the high intensity, the light intensity of the detection channels adjacent to the high-reflectivity area within the next group is determined to be the low intensity. When the emission strategy for the previous group corresponds to the low intensity, it can be determined that the emission strategy for the detection channels adjacent to the high-reflectivity area within the next group/cycle is different from the low intensity. For example, the emission strategy can include non-emission or the light intensity different from the low intensity.

In some embodiments, when determining that the detected group has encountered the high-reflectivity obstacle, using the different emission strategy from the previous group for the next group of lasers based on the light intensity of the emitted lasers further includes: using the high intensity to emit light for detection channels that are not adjacent to the high-reflectivity area within the next group.

As mentioned above, in the detection channel that can cause the high crosstalk, the high-reflectivity signal in its detection result can be caused by the high-reflectivity obstacle in the detection channel, or by the high-reflectivity obstacle in the adjacent channels. Step S162 can predict the detection channel covered by the high-reflectivity obstacle within the previous group based on an echo intensity and the light intensity, so as to predict a detection channel that will encounter the high-reflectivity obstacle in its own detection orientation during a next detection. In such a case, to avoid the crosstalk to other channels caused by the detection channel that will encounter the high-reflectivity obstacle during the next detection, step S162 can determine the light intensity of the group corresponding to the next detection based on the light intensity and an echo degree of each emitted channel, that is, determine the emission strategy for lasers corresponding to the next group. It should be noted herein that using the different emission strategy from the previous for the next group of lasers is mainly to form a control group with the previous group to determine the detection channel truly corresponding to the high-reflectivity obstacle. When determining the detection channel truly corresponding to the high-reflectivity obstacle, the detection channel truly corresponding to the high-reflectivity obstacle (also known as the high-reflectivity channel) can use a low light intensity or non-emission to avoid causing the optical crosstalk to other channels in parallel. Meanwhile, other channels can continue to maintain the ranging capability with the light intensity of the high intensity.

In some embodiments, step S162 can include that when determining that all detection channels within the previous group are target detection channels that do not cause the high crosstalk to other detection channels, the light intensity of the group corresponding to the next detection can be determined to use the high intensity to emit light.

A target detection channel can be a channel that causes the high crosstalk to other detection channels, or simply referred to as a high crosstalk channel. Correspondingly, a channel that does not cause the high crosstalk to other detection channels can be simply referred to as a non-high crosstalk channel.

It should be noted that regardless of whether the optical signals emitted by the detection channels within the previous group are the low intensity or the high intensity, when all detection channels within the previous group have not received echo signals exceeding a predetermined threshold, it can be determined that no high-reflectivity obstacle is present in the previous group. In such a case, the controller apparatus 600 can predict that the detection channels within the group (adjacent to the previous group and vertically adjacent) corresponding to the next detection will not encounter the high-reflectivity obstacle or be affected by the crosstalk of the high-reflectivity signals. In such a case, during the next detection, each detection channel within the group corresponding to the next detection can use the high intensity to emit light.

In some embodiments, step S162 can further include that when the light intensity of at least one detection channel within the previous group is the high intensity and the high crosstalk, the group corresponding to the next detection is determined to be the low intensity.

Specifically, when at least one detection channel within the previous group used a relatively high light intensity and the detection channel is the high crosstalk channel, it represents that at least one channel of parallel emitting channels within the previous group has encountered the high-reflectivity obstacle, causing the crosstalk to other parallel detecting channels within the group. To efficiently determine the detection channel truly covered by the high-reflectivity obstacle, each detection channel within the group during the next detection can use the low intensity to emit light. The echo intensity detected by the next group can be used to determine the detection channel that has encountered the high-reflectivity obstacle in the detection channels. In addition, using the low intensity to emit the light will not cause the crosstalk to other detection channels.

In some embodiments, step S162 can further include that when the light intensity used by at least one detection channel within the previous group to emit the light is the low intensity, the detection channel is the high crosstalk channel, and when other detection channels are non-high crosstalk channels, it is determined that detection channels adjacent to the high crosstalk channel within the group corresponding to the next detection does not emit light in the detection of the group, and other detection channels use the high intensity to emit light.

Specifically, when the current detection channel uses a relatively low intensity to emit light, it represents that even if the current detection channel has encontered a high-reflectivity object in its orientation, the echo signal of the channel will not cause the crosstalk to other parallel emitting detection channels. That is, the high-reflectivity signal is only present in the detection channel covered by the high-reflectivity obstacle. At this time, when the light intensity used by at least one detection channel within the previous group uses is the low intensity, and when the detection channel is the high crosstalk channel, the high-reflectivity obstacle is present in the high crosstalk detection channel, while other detection channels are non-high crosstalk channels, no high-reflectivity obstacle is present in the non-high crosstalk channels. In such a case, the controller apparatus 600 can predict that within the group (adjacent to the previous group and vertically adjacent) corresponding to the next detection, the detection channels adjacent to the high crosstalk channel within the previous group can encounter the high-reflectivity obstacle or be affected by the crosstalk of the high-reflectivity signals in the high crosstalk channel, while other detection channels will not be affected by the crosstalk of the high-reflectivity signals. In such a case, within the group corresponding to the next detection, the detection channels adjacent to the high crosstalk channel within the previous group can use the emission strategy of the non-emission, and the intensity of the optical signals emitted by other detection channels is the high intensity, which means that other detection channels use the high intensity to emit light.

In some embodiments, step S162 can include that when at least one detection channel within the previous group does not emit light, during the detection of the next group, detection channels adjacent to the non-emission detection channel use the low intensity to emit light.

Specifically, when at least one detection channel within the previous group does not emit light, it means that other detection channels that emit light in parallel with the non-emission detection channel within the previous group have completed detection without the crosstalk. To prevent a deadlock and address a problem of the high crosstalk, during the next detection, the detection channels adjacent to the non-emission detection channel within the previous group use the low intensity to emit light. It should be noted that the detection channels adjacent herein refer to adjacent detection channels with small physical distance in the vertical direction, with no other detection channels in between, or with a relatively small number of detection channels in between.

In some embodiments, step S162 can include that when at least one detection channel within the previous group does not emit light, and other detection channels are all non-high crosstalk channels, it is determined that within the group corresponding to the next detection, the detection channels adjacent to the non-emission detection channel use the low intensity to emit light, and other detection channels use the high intensity to emit light.

When other detection channels within the previous group are non-high crosstalk channels, other detection channels within the previous group all have emitted optical signals, and the light intensity of the optical signals can be the high intensity or the low intensity. Since other detection channels within the previous group are all non-high crosstalk channels, no high-reflectivity signals are present in other detection channels within the previous group, so that the controller apparatus 600 can determine that no high-reflectivity obstacle is present in other detection channels within the previous group. In such a case, during the next detection, other detection channels (other detection channels adjacent to the non-emission detection channel) within the group corresponding to the next detection use the high intensity to emit light.

In some embodiments, step S162 can include determining that at least one detection channel within the previous group does not emit light, and there is a high crosstalk channel in other detection channels. When the high crosstalk channel in other detection channels use the high intensity to emit light, within the group corresponding to the next detection, the detection channels adjacent to the non-emission detection channel within the previous group can use the low intensity to emit light, and other detection channels can use the low intensity to emit light. When the high crosstalk channel in other detection channels use the low intensity to emit light, in the group corresponding to the next detection, the detection channels adjacent to the non-emission detection channel within the previous group use the low intensity to emit light, the detection channels adjacent to the high crosstalk channel with the low intensity do not emit light, and the detection channels adjacent to non-high crosstalk channels use the high intensity to emit light.

In some embodiments, when determining that the detected group has not encountered the high-reflectivity obstacle, there can be multiple types of predetermined emission strategies. For example, when none of the detection channels within the previous group is non-emission detection channel, the predetermined emission strategy includes all detection channels using the high intensity to emit light. When the detection channels within the previous group include non-emission detection channel, the predetermined emission strategy includes that the detection channels adjacent to the non-emission detection channel use the low intensity to emit light, and other detection channels use the high intensity to emit light.

It should be noted that during a first group (cycle) of detection in the current horizontal orientation, all detection channels use a higher light intensity.

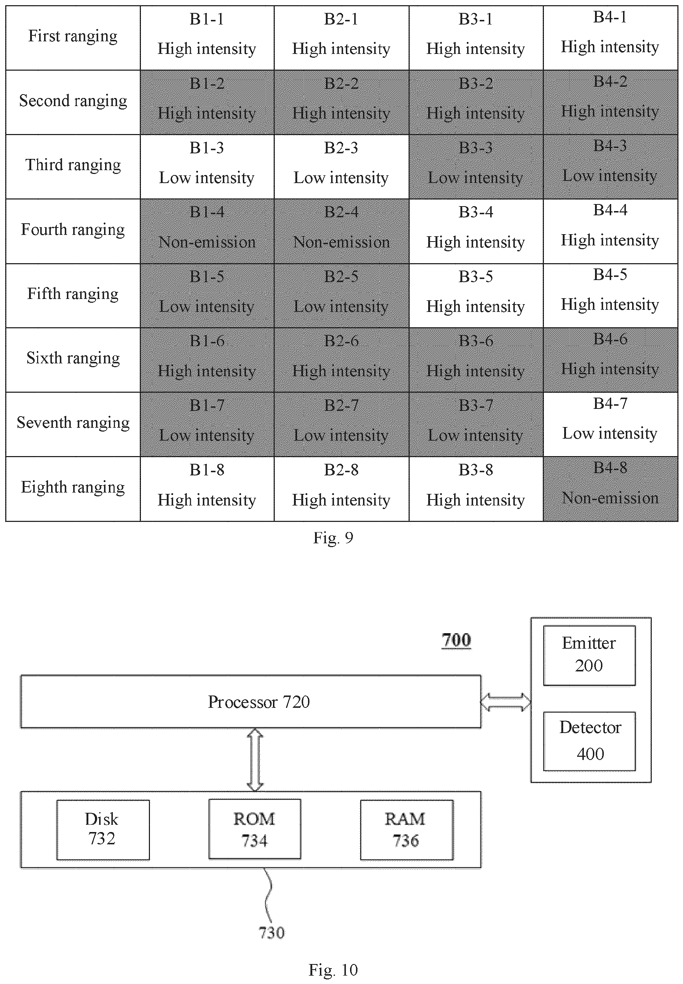

Fig. 9 shows a schematic diagram of light intensity, provided in some embodiments of this specification. Fig. 9 corresponds to Fig. 5. As shown in Fig. 5, the high crosstalk area 111 is an area where the high-reflectivity obstacle 101 overlaps with fields of view that the multiple detection channels can detect. As shown in Fig. 5, the detection channels covered by the high-reflectivity obstacle 101 are detection channels B1-2, B2-2, B1-3, B2-3, B1-4, and B2-4. The detection channels covered by the high-reflectivity obstacle 102 are detection channels B4-6 and B4-7.

As shown in Fig. 9, in a first detection, the optical signals with the high intensity are emitted by all detection channels B1-1, B2-1, B3-1, and B4-1. Since no high-reflectivity obstacle is present in any detection channel, no high-reflectivity signals are received in any detection channel.

In a second detection, all detection channels B1-2, B2-2, B3-2, and B4-2 emit the optical signals with the high intensity. Since the high-reflectivity obstacle 101 covers the detection channels B1-2 and B2-2, there can be the high-reflectivity signals in B1-2 and B2-2, and B3-2 and B4-2 can also be affected by the crosstalk of the high-reflectivity signals. In such a case, specific detection channel covered by the high-reflectivity obstacle 101 can not be determined. In such a case, to determine which channel encounters the high-reflectivity obstacle, all detection channels B1-3, B2-3, B3-3, and B4-3 emit the optical signals with the low intensity during a third detection.

In the third detection, since all detection channels B1-3, B2-3, B3-3, and B4-3 emit the optical signals with the low intensity, the high-reflectivity signal can only exist in the detection channel covered by the high-reflectivity obstacle and will not cause the crosstalk to the adjacent detection channels. Since the high-reflectivity obstacle 101 covers the detection channels B1-3 and B2-3, echo signals received by B1-3 and B2-3 can still be relatively strong. And the controller apparatus 600 can determine that the high-reflectivity signals in B1-3 and B2-3 are caused by the high-reflectivity obstacle in B1-3 and B2-3, not by the crosstalk of the adjacent detection channels. There are no high-reflectivity signals in B3-3 and B4-3, so there are no high-reflectivity obstacle in B3-3 and B4-3. Since it has already been determined that the high-reflectivity obstacle is present in channels B1-3 and B2-3, and no high-reflectivity obstacle is present in B3-3 and B4-3, but the low light intensity is used at this time to emit light, B3-3 and B4-3 can not detect signals due to encountering an object with a relatively low reflectivity or an obstacle that is too far away. In such a case, during a fourth detection, the detection channels B1-4 and B2-4 adjacent to B1-3 and B2-3 do not emit light, while the other detection channels B3-4 and B4-4 both emit optical signals with the high intensity to better detect orientations covered by B1-4 and B2-4.

In the fourth detection, since B1-4 and B2-4 do not emit light, B1-4 and B2-4 are determined to encounter the high-reflectivity obstacle. Since no high-reflectivity obstacle is present in B3-4 and B4-4, B3-4 and B4-4 will not receive the high-reflectivity signals. During a fifth detection, to prevent the deadlock and address the problem of high-reflectivity, B1-5 and B2-5 adjacent to non-emission B1-4 and B2-4 use the low intensity to emit light. The low intensity to emit light is mainly used to test whether channels B1 and B2 have moved out of the high-reflectivity area. Detection channels B3-5 and B4-5 adjacent to B3-4 and B4-4 use the high intensity to emit light.

In the fifth detection, B1-5 and B2-5 use the low intensity to emit light, while B3-5 and B4-5 use the high intensity to emit light. Since no high-reflectivity obstacle is present in B1-5, B2-5, B3-5, and B4-5, no high-reflectivity signals are detected by B1-5, B2-5, B3-5, and B4-5. B1-5, B2-5, B3-5, and B4-5 are all non-high crosstalk detection channels. In such a case, in a sixth detection, all detection channels B1-6, B2-6, B3-6, and B4-6 emit optical signals with the high intensity.

In the sixth detection, all detection channels B1-6, B2-6, B3-6, and B4-6 use the high intensity to emit light. Since a high-reflectivity obstacle is present in B4-6, and B4-6 is the optical signal with the high intensity, B1-6, B2-6, B3-6, and B4-6 all can detect high-reflectivity signals. B1-6, B2-6, B3-6, and B4-6 are all high crosstalk channels. In such a case, during a seventh detection, all detection channels B1-7, B2-7, B3-7, and B4-7 emit optical signals with the low intensity.

In the seventh detection, all detection channels B1-7, B2-7, B3-7, and B4-7 use the optical signals with the low intensity. Since the high-reflectivity obstacle is present in B4-7, and B4-7 is the optical signal with the low intensity, B4-7 can detect the high-reflectivity signal and is the high crosstalk channel. Other detection channels B4-7, B2-7, and B3-7 are all non-high crosstalk channels. In such a case, during an eighth detection, B1-7, B2-7, and B3-7 use the high intensity to emit light, while B4-7 does not emit light.

In the eighth detection, B1-7, B2-7, and B3-7 use the optical signals with the high intensity, while B4-7 does not emit light. Since B4-7 does not emit light, and no high-reflectivity obstacle is present in other detection channels, no high-reflectivity signals are received in any detection channel. Since B4-7 does not emit light, B4-7 is determined as the high crosstalk channel, while other detection channels are non-high crosstalk channels. At this time, three channels B1-7, B2-7, and B3-7 that truly emit light do not encounter the high-reflectivity obstacle.

When determining the emission strategy for the next group of lasers that will emit light in parallel, the next group of lasers can be controlled to emit light based on the emission strategy. In such a case, as shown in Fig. 4, the method P100 can further include the following.

In S180, controlling the next group of lasers to emit light based on the emission strategy.

For example, the light intensity of each laser within the group of lasers corresponding to the next group of detection channels can be determined based on the emission strategy for the next group of lasers. Then the lasers within the group of lasers are controlled to emit light in parallel based on the light intensity. When the lasers are controlled to emit light in parallel, the detectors corresponding a same detection channel can further be used to receive the echoes. When receiving the detection results, an execution can be returned to determine the emission strategy for the next group of lasers that will operate based on the detection results of the multiple detectors and the light intensity of the emitted lasers, until all detection channels have completed the detection. In such a case, it allows for polling multiple groups of detection channels for light emission in a horizontal orientation, which can accurately determine the detection channel that encounters high-reflectivity in the detection channels. The light intensity of the detection channel that encounters the high-reflectivity is limited to avoid causing the optical crosstalk to other detection channels. In this way, other detection channels can continue to use the high light intensity to emit light to ensure the radar's ranging capability.

As shown in Fig. 4, the method P100 can further include the following.

In S200, processing unreliable detection results to determine corresponding correction signals.

The unreliable detection results can include at least one of the following situations.

The light intensity is the low intensity, and the detection channel is the non-high crosstalk channel; or
At least one of detection channels within the group uses the high intensity to emit light, and the detection channel is the high crosstalk channel.

As shown in Fig. 7B, when the light intensity is the low intensity, and the detection channel is the non-high crosstalk channel, the feature information of the detection result is lower than the filtering threshold TH0 of the noise signal. At this time, the detection result can be determined as the noise signal. In such a case, distance cannot be calculated. As shown in Fig. 8A, when at least one detection channel uses the high intensity to emit light, and the detection channel is the high crosstalk channel, at this time, the high crosstalk channel can cause the crosstalk to other detection channels, affecting a returned detection result in the detection channel. In such a case, it causes that the detection result received by each detection channel is unreliable.

Taking embodiments shown in Fig. 5 and Fig. 9 as an example, in Fig. 9, an unreliable detection result is marked as a shaded area. In the first detection, since all detection channels B1-1, B2-1, B3-1, and B4-1 emit the optical signals with the high intensity, and all detection channels are non-high crosstalk channels, results of all detection channels are reliable.

In the second detection, all detection channels B1-2, B2-2, B3-2, and B4-2 emit the optical signals with the high intensity. Since the high-reflectivity obstacle 101 covers the detection channels B1-2 and B2-2, all detection channels are affected by the crosstalk. In such a case, detection results of all detection channels are unreliable detection results.

In the third detection, all detection channels B1-3, B2-3, B3-3, and B4-3 emit the optical signals with the low intensity, B 1-3 and B2-3 are high crosstalk channels, and B3-3 and B4-3 are non-high crosstalk channels. The feature information of detection results in B 1-3 and B2-3 is higher than the first threshold TH1. The feature information of detection results in B3-3 and B4-3 is lower than the filtering threshold TH0 of the noise signal. In such a case, detection results of B3-3 and B4-3 are unreliable detection results.

In the fourth detection, since B1-4 and B2-4 do not emit light, detection results of B1-4 and B2-4 are unreliable detection results. Since B3-4 and B4-4 use the high intensity to emit light and are non-high crosstalk channels, their results are reliable.

In the fifth detection, since B1-5 and B2-5 emit the optical signals with the low intensity and are non-high crosstalk channels, and feature information is lower than TH1, detection results of B1-5 and B2-5 are unreliable detection results. Since B3-5 and B4-5 emit the optical signals with the high intensity and are non-high crosstalk channels, detection results of B3-5 and B4-5 are reliable detection results.

The sixth detection is similar to the second detection and will not be repeated herein.

The seventh detection is similar to the third detection and will not be repeated herein.

The eighth detection is similar to the fourth detection and will not be repeated herein.

Determining the correction signals corresponding to the unreliable detection results can include one of the following situations.

Re-detecting based on the unreliable detection results to determine the correction signals; or
Fusing features of detection results of other detection channels adjacent to the unreliable detection results to determine the correction signals. The fusing features can include at least one of weighted summing, averaging, pooling, and interpolating.

There are various ways to determine the correction signal by re-detecting based on the unreliable detection results. For example, the above detection method can be used to re-detect an unreliable detection channel corresponding to the shaded area in Fig. 9, so that the detection result is used as the correction signal. Alternatively, the detection result of re-detection can be compared with historical detection results to determine the correction signal.

There are various ways to fuse features of the detection results of other detection channels adjacent to the unreliable detection results. For example, taking the unreliable detection result corresponding to B3-7 in Fig. 9 as an example, a ranging result of the detection channel B3-7 can be fused with ranging results of physically adjacent detection channels (such as B3-6, B3-8, B4-7 or other physically adjacent detection channels). There can be multiple methods of fusing, such as at least one of weighted summing, averaging, pooling, and interpolating, and a strengh of fused echo signal is used as the correction signal.

In summary, in the method for detection of the LiDAR P100 provided in this specification, the multiple lasers are divided into the multiple groups, with the lasers in each group emitting light in parallel. And the multiple detectors are used to detect the echoes of the lasers emitted in parallel by the lasers. Then, the emission strategy for the next group of lasers that will emit light in parallel is determined based on the detection results of the multiple detectors and the light intensity of the lasers emitted in parallel. And the emission strategy allows the lasers emitted in parallel to have different light intensities. Then the next group is controlled to emit light based on the emission strategy. Since this solution allows for polling in groups during the detection process in the current horizontal orientation, and the emission strategy for the next group is determined based on the detection result and the light intensity of the previous group. In the horizontal orientation, rather than after detection in a full horizontal field of view, a specific channel encountering the high-reflectivity object is accurately identified, and then precisely controlled. That is, by reducing the light intensity of the detection channel covered by the high-reflectivity obstacle, the crosstalk that the high-reflectivity obstacle can cause to other detection channels is suppressed, effectively avoiding ghost images. Meanwhile, for the detection channels not covered by the high-reflectivity obstacle, the optical signals with the high intensity can continue to be used to maintain the ranging capability and accuracy of the LiDAR.

Fig. 10 shows a schematic diagram of an illustrative hardware of a system 700 for detection of a LiDAR, provided in some embodiments of this specification. As shown in Fig. 10, the system700 for detection of the LiDAR can include at least one storage medium 730 and at least one processor 720.

The storage medium 730 can include a data storage apparatus. The data storage apparatus can be a non-transient storage medium or a transient storage medium. For example, the data storage apparatus can include a disk 732, a read-only storage medium ("ROM") 734, or a random access storage medium ("RAM") 736. The storage medium 730 further includes at least one instruction set stored in the data storage apparatus. The at least one instruction set is used for detection of LiDAR. The instructions are computer program codes, which can include programs, routines, objects, components, data structures, processes, modules, or the like that perform the method for detection of the LiDAR provided in this specification.

At least one processor 720 can be communicatively couple to at least one storage medium 730 and communication port 650 through an internal communication bus 710. At least one processor 720 can execute the at least one instruction set. When the system for detection of the LiDAR 700 is operating, at least one processor 720 reads the at least one instruction set and performs the method for detection of the LiDAR provided in this specification based on the instructions of the at least one instruction set. The processor 720 can perform all steps included in the method for detection of the LiDAR. The processor 720 can be in a form of one or more processors. In some embodiments, the processor 720 can include one or more hardware processors, such as a microcontroller, a microprocessor, a reduced instruction set computer ("RISC"), an application specific integrated circuit ("ASIC"), an application specific instruction set processor ("ASIP"), a central processor unit ("CPU"), a graphics processor unit ("GPU"), a physical processor unit ("PPU"), a microcontroller unit, a digital signal processor ("DSP"), a field programmable gate array ("FPGA"), an advanced RISC machine ("ARM"), a programmable logic device ("PLD"), any circuit or processor capable of performing one or more functions, or any combination thereof. For the purpose of illustrating a problem, only one processor 720 is described in the system for detection of the LiDAR 700 in this specification. However, it should be noted that the system for detection of the LiDAR 700 in this specification can further include multiple processors. In such a case, operations and/or method steps disclosed in this specification can be executed by one processor as described in this specification, or by multiple processors in combination. For example, if the processor 720 of the system for detection of the LiDAR 700 executes steps A and B in this specification, it should be understood that the steps A and B can also be combined or separately executed by two different processors 720 (e.g., a first processor executes step A, a second processor executes step B, or the first and second processors execute the steps A and B jointly.)

On the other hand, this specification provides a non-transient storage medium that stores at least one set of executable instructions detected by the LiDAR. When the executable instructions are executed by the processor, the executable instructions instruct the processor to perform steps of the method for detection of the LiDAR P100 described in this specification. In some possible embodiments, various aspects of this specification can also be implemented in a form of a program product, which includes program codes. When the program product is run on the system for detection of the LiDAR 700, the program codes can make the system for detection of the LiDAR 700 to perform steps of the detection of the LiDAR described in this specification. The program product used to perform the above method can use a portable compact disc read-only memory ("CD-ROM") including the program codes and can be run on the system for detection of the LiDAR 700. However, the program product of this specification is not limited thereto. In this specification, a readable storage medium can be any tangible medium including or storing a program that can be used by an instruction execution system (e.g., the processor 720) or used in combination with it. The program product can use any combination of one or more readable media. The readable medium can be a readable signal medium or a readable storage medium. The readable storage medium can, for example, be, but is not limited to, electrical, magnetic, optical, electromagnetic, infrared, or semiconductor system, appratus, or device, or a combination of any of the above. More specific examples of the readable storage medium include: an electrical connection with one or more wires, a portable disk, a hard drive, a random access memory ("RAM"), a read-only memory ("ROM"), an erasable programmable read-only memory ("EPROM" or flash memory), fiber optics, a portable compact disk read-only memory ("CD-ROM"), an optical storage device, a magnetic storage device, or any suitable combination of the above. The computer-readable storage medium can include a data signal propagated in a baseband or as a part of a carrier wave, carrying readable program codes. This propagated data signal can take various forms, including but not limited to an electromagnetic signal, an optical signal, or any suitable combination of the above. The readable storage medium can also be any readable medium other than the readable storage medium, which can emit, propagate, or transmit a program for use by or in combination with an instruction execution system, an apparatus, or a device. The program codes included in the readable storage medium can be transmitted using any suitable medium, including but not limited to wireless, wired, fiber optic, RF, or the like, or any suitable combination of the above. The program codes used to perform operations of this specification can be written in any combination of one or more programming languages, including object-oriented programming languages such as Java and C++, and conventional procedural programming languages such as "C" or similar programming languages. The program codes can be executed entirely on the detection system for the LiDAR 700, partially on the detection system for the LiDAR 600, as an independent software package, partially on the detection system for the LiDAR 600 and partially on a remote computing device, or entirely on the remote computing device.

Some embodiments of this specification can further provide a LiDAR 001, as shown in Fig. 1, including multiple lasers 200, multiple detectors 200, and a controller apparatus 600. The lasers emit optical signals outward during operation, and the detectors receive detection echoes reflected by obstacle during operation. The multiple lasers and the multiple detectors form multiple detection channels. The system for detection of the LiDAR is communicatively coupled to the multiple lasers and the multiple detectors during operation, and can divide all of the multiple lasers into multiple groups, with the lasers in each group emitting light in parallel, use the multiple detectors to detect echoes, and determine an emission strategy for a next group of lasers that will emit light in parallel based on detection results of the multiple detectors and a light intensity of emitted lasers, where the emission strategy allows lasers emitted in parallel to have different light intensities; and control the next group of lasers to emit light based on the emission strategy.

In some embodiments, the controller apparatus 600 can further determine whether the detected group has encountered a high-reflectivity obstacle based on the detection results of the multiple detectors, where the high-reflectivity obstacle include an object with reflectivity exceeding a predetermined reflectivity threshold. And the controller apparatus 600 can determine the emission strategy for the next group of lasers based on whether the detected group has encountered the high-reflectivity obstacle and the light intensity of the emitted lasers.

In some embodiments, the controller apparatus 600 can be further configured that the emission strategy includes at least one of light intensity or a relative time sequence of emission by multiple detection channels within the group.

In some embodiments, the controller apparatus 600 can be further configured that the light intensity includes one of high intensity, low intensity, and non-emission, and the high intensity is greater than the low intensity.

In some embodiments, the controller apparatus 600 can be further configured that the detected group includes at least a previous group, and when feature information of at least one of the detection results is greater than a predetermined high-reflectivity threshold in the detection results of the previous group, determining that the previous group has encountered the high-reflectivity obstacle, otherwise, determining that the previous group has not encountered the high-reflectivity obstacle.

In some embodiments, the controller apparatus 600 can be further configured that the feature information includes at least one of intensity, amplitude, and reflectivity.

In some embodiments, the controller apparatus 600 can be further configured to use a different emission strategy from the previous group for the next group of lasers based on the light intensity of the emitted lasers when determining that the detected group has encountered the high-reflectivity obstacle; or use a predetermined emission strategy for the next group of lasers based on the light intensity of the emitted lasers when determining that the detected group has not encountered the high-reflectivity obstacle.

In some embodiments, the controller apparatus 600 can be further configured to determine a high-reflectivity area in the previous group, where the high-reflectivity area includes an area covered by the high-reflectivity obstacle and an area affected by crosstalk from a reflection signal of the high-reflectivity obstacle; and use a different emission strategy from the previous group for detection channels adjacent to the high-reflectivity area within the next group based on the light intensity of the emitted lasers.

In some embodiments, the controller apparatus 600 can be further configured to determine a detection channel in the previous group whose feature information of detection result is higher than the high-reflectivity threshold as the high-reflectivity area.

In some embodiments, the controller apparatus 600 can be further configured to determine that the detection channels adjacent to the high-reflectivity area within the next group use the low intensity to emit light when the emission strategy for the previous group is the high intensity; and determine that the detection channels adjacent to the high-reflectivity area within the next group do not emit light when the emission strategy for the previous group is the low intensity.

In some embodiments, the controller apparatus 600 can be further configured that the detection channels not adjacent to the high-reflectivity area within the next group use the high intensity to emit lightr.

In some embodiments, the controller apparatus 600 can be further configured that the predetermined emission strategy includes all detection channels using the high intensity to emit light when the detection channels within the previous group are not non-emission detection channels.

In some embodiments, the controller apparatus 600 can be further configured that the predetermined emission strategy includes the detection channels adjacent to the non-emission detection channels using the low intensity to emit light and other detection channels using the high intensity to emit light when the detection channels within previous group do not emit light.

In some embodiments, the controller apparatus 600 can be further configured to process n unreliable detection results to determine corresponding correction signals, where the unreliable detection results include at least one of: a detection result corresponding to a detection channel with the light intensity being the low intensity and located outside the high-reflectivity area; or a detection result corresponding to a detection channel within a group where the light intensity of at least one detection channel is the high intensity and located inside the high-reflectivity area.

In some embodiments, the controller apparatus 600 can be further configured that determining corresponding correction signals includes at least one of: re-retecting based on the unreliable detection results to determine the correction signals; and fusing features of detection results of other detection channels adjacent to detection channels corresponding to the unreliable detection results to determine the correction signals.

In some embodiments, the controller apparatus 600 can be further configured that fusing features includes at least one of weighted summing, averaging, pooling, and interpolating.

In some embodiments, the controller apparatus 600 can be further configured that emitting light in parallel refers that detection of the multiple detection channels within the group is completed in a same time window.

Specific embodiments of this specification have been described above. Other embodiments are within a scope of appended claims. In some cases, actions or steps recited in the claims can be performed in a different order than that in the embodiments and still achieve a desired result. In addition, processes depicted in the drawings do not necessarily need to be shown in a specific order or a continuous order to achieve the desired result. In some embodiments, multitasking and parallel processing are also possible or can be beneficial.

In summary, once reading this detailed disclosure, it can be understood by those skilled in the art that the foregoing detailed disclosure can be presented only as an example, and can not be limiting. Although it is not explicitly stated herein, it can be understood by those skilled in the art that needs of this specification encompass various reasonable changes, improvements, and modifications to the embodiments. These changes, improvements, and modifications are intended to be proposed by this specification and are within the spirit and scope of the exemplary embodiments of this specification.

In addition, some terms in this specification have been used to describe the embodiments of this specification. For example, at least one of "one embodiment," "an embodiment," or "some embodiments" means that specific features, structures or characteristics described combined with this embodiment can be included in at least one of the embodiments of this specification. In such a case, it can be emphasized and should be understood that references to two or more of "an embodiment" or "one embodiment" or "an alternative embodiment" in various parts of this specification do not necessarily all refer to the same embodiment. In addition, the specific features, structures or characteristics can be appropriately combined in one or more of the embodiments of this specification.

It should be understood that in the foregoing description of the embodiments of this specification, to help understand one feature, this specification combines various features in a single embodiment, drawing or description thereof for the purpose of simplifying this specification. However, this does not mean that a combination of these features is beneficial, and it is entirely possible for those skilled in the art to mark some of devices as separate embodiments for understanding when reading this specification. That is to say, the embodiments in this specification can also be understood as integration of multiple sub-embodiments. And content of each sub-embodiment is also true when it is less than all features of a single previously disclosed embodiment.

Every patent, patent application, publication of patent application, and other materials cited herein, such as papers, books, specification, publications, documents, and articles, can be incorporated herein by reference. All content used for all purposes, except any history of prosecution documents related thereto, any identical history of prosecution documents that can be inconsistent or conflict with this document, or any identical history of prosecution documents that can have a limited influence on a broadest scope of the claims, is associated with this document currently or in the future. For example, if there is any inconsistency or conflict between at least one of description, definition or use of terms associated with any contained material and at least one of terms, description, definition or use related to this document, the terms in this document shall prevail.

Finally, it should be understood that the embodiments of this disclosure disclosed herein are illustrative of principles of the embodiments of this specification. Other modified embodiments are also within a scope of this specification. In such a case, the embodiments disclosed in this specification are only as examples rather than limitations. Alternative configurations can be used by those skilled in the art based on the embodiments in this specification to realize this disclosure in this specification. In such a case, the embodiments of this specification are not limited to those accurately described in this disclosure.

## Claims

1. A method for detection of a LiDAR, the LiDAR comprises a plurality of lasers and a plurality of detectors, wherein the method comprises:
dividing all of the plurality of lasers into a plurality of groups, with lasers within each group emitting light in parallel;
detecting an echo using the plurality of detectors;
determining an emission strategy for a next group of lasers configured to emit light in parallel based on detection results of the plurality of detectors and a light intensity of emitted lasers, wherein the emission strategy allows lasers emitted in parallel to have different light intensities; and
controlling the next group of lasers to emit light based on the emission strategy.

2. The method of claim 1, wherein determining the emission strategy for the next group of lasers configured to emit light in parallel based on the detection results of the plurality of detectors and the light intensity of the emitted lasers comprises:
determining whether a detected group has encountered a high-reflectivity obstacle based on the detection results of the plurality of detectors, wherein the high-reflectivity obstacle comprises an object with a reflectivity exceeding a predetermined reflectivity threshold; and
determining the emission strategy for the next group of lasers based on whether the detected group has encountered the high-reflectivity obstacle and the light intensity of the emitted lasers.

3. The method of claim 2, wherein the emission strategy comprises at least one of light intensity or a relative time sequence of emission across a plurality of detection channels within the group.

4. The method of claim 3, wherein the light intensity comprises one of high intensity, low intensity, and non-emission, and the high intensity is greater than the low intensity.

5. The method of claim 4, wherein the detected group comprises at least a previous group, and determining whether the detected group has encountered the high-reflectivity obstacle based on the detection results of the plurality of detectors comprises:
when feature information of at least one of the detection results is greater than a predetermined high-reflectivity threshold in the detection results of the previous group, determining that the previous group has encountered the high-reflectivity obstacle, otherwise, determining that the previous group has not encountered the high-reflectivity obstacle.

6. The method of claim 5, wherein the feature information comprises at least one of intensity, amplitude, and reflectivity.

7. The method of claim 2, wherein determining the emission strategy for the next group of lasers based on whether the detected group has encountered the high-reflectivity obstacle and the light intensity of the emitted lasers comprises:
when determining that the detected group has encountered the high-reflectivity obstacle, using a different emission strategy from the previous group for the next group of lasers based on the light intensity of the emitted lasers; or
when determining that the detected group has not encountered the high-reflectivity obstacle, using a predetermined emission strategy for the next group of lasers based on the light intensity of the emitted lasers.

8. The method of claim 7, wherein when determining that the detected group has encountered the high-reflectivity obstacle, using the different emission strategy from the previous group for the next group of lasers based on the light intensity of the emitted lasers comprises:
determining a high-reflectivity area in the previous group, wherein the high-reflectivity area comprises an area covered by the high-reflectivity obstacle and an area affected by crosstalk from a reflection signal of the high-reflectivity obstacle; and
using a different emission strategy from the previous group for detection channels adjacent to the high-reflectivity area within the next group based on the light intensity of the emitted lasers.

9. The method of claim 8, wherein determining the high-reflectivity area in the previous group comprises:
determining a detection channel within the previous group where the feature information of detection result is higher than a high-reflectivity threshold as the high-reflectivity area.

10. The method of claim 8, wherein using the different emission strategy from the previous group for the detection channels adjacent to the high-reflectivity area within the next group based on the light intensity of the emitted lasers comprises one of the following situations:
when the emission strategy for the previous group is the high intensity, determining the light intensity of the detection channels adjacent to the high-reflectivity area within the next group as the low intensity; or
when the emission strategy for the previous group is the low intensity, determining the light intensity of the detection channels adjacent to the high-reflectivity area within the next group as the non-emission.

11. The method of claim 7, wherein when determing that the detected group has encountered the high-reflectivity obstacle, using the different emission strategy from the previous group for the next group of lasers based on the light intensity of the emitted lasers further comprises:
using the high intensity to emit light for detection channels that are not adjacent to the high-reflectivity area within the next group.

12. The method of claim 7, wherein when the light intensity of the previous group is not the non-emission, the predetermined emission strategy comprises the light intensity of all detection channels being the high intensity.

13. The method of claim 8, wherein when the light intensity of the previous group comprises the non-emission, the predetermined emission strategy comprises the light intensity of detection channels adjacent to non-emission detection channels being the low intensity, and the light intensity of other detection channels being the high intensity.

14. The method of claim 8, further comprising:
processing unreliable detection results to determine corresponding correction signals, wherein the unreliable detection results comprise at least one of:
a detection result corresponding to a detection channel with the light intensity being the low intensity and located outside the high-reflectivity area;
a detection result corresponding to a detection channel with the light intensity being the non-emission; and
a detection result corresponding to a detection channel with the light intensity being the non-emission, and a detection result corresponding to a detection channel within a group where the light intensity of at least one detection channel is the high intensity and located inside the high-reflectivity area.

15. The method of claim 14, wherein determining the corresponding correction signals comprises at least one of:
re-detecting based on the unreliable detection results to determine the correction signals; and
fusing features of detection results of other detection channels adjacent to detection channels corresponding to the unreliable detection results to determine the correction signals.

16. The method of claim 15, wherein fusing features comprises at least one of weighted summing, averaging, pooling, and interpolating.

17. The method of claim 1, wherein emitting light in parallel comprises detection of the plurality of detection channels within the group is completed within a same time window.

18. A system for detection of a LiDAR, comprising:
at least one storage medium configured to store at least one instruction set for LiDAR detection; and
at least one processor communicatively coupled to the at least one storage medium,
wherein when the system for detection of the LiDAR is in operation, the at least one processor is configured to read the at least one instruction set and implement the method for detection of the LiDAR based on any one of claims 1 to 17.

19. A LiDAR, comprising:
a plurality of lasers configured to emit an optical signal outward during operation;
a plurality of detectors configured to receive a detection echo reflected by an obstacle during operation, wherein the plurality of lasers and the plurality of detectors form a plurality of detection channels; and
a controller apparatus communicatively coupled to the plurality of lasers and the plurality of detectors during operation, configured to divide all of the plurality of lasers into a plurality of groups for polling light emission, with lasers in each group emitting light in parallel; detect an echo using the plurality of detectors; determine an emission strategy for a next group of lasers configured to emit light in parallel based on detection results of the plurality of detectors and a light intensity of emitted lasers, wherein the emission strategy allows lasers emitted in parallel to have different light intensities; and control the next group of lasers to emit light based on the emission strategy.

20. The LiDAR of claim 19, wherein determining the emission strategy for the next group of lasers configured to emit light in parallel based on the detection results of the plurality of detectors and the light intensity of the emitted lasers comprises:
determining whether a detected group has encountered a high-reflectivity obstacle based on the detection results of the plurality of detectors, wherein the high-reflectivity obstacle comprises an object with a reflectivity exceeding a predetermined reflectivity threshold; and
determining the emission strategy for the next group of lasers based on whether the detected group has encountered the high-reflectivity obstacle and the light intensity of the emitted lasers.

21. The LiDAR of claim 20, wherein the emission strategy comprises at least one of light intensity or a relative time sequence of emission across a plurality of detection channels within the group.

22. The LiDAR of claim 21, wherein the light intensity comprises one of high intensity, low intensity, and non-emission, and the high intensity is greater than the low intensity.

23. The LiDAR of claim 22, wherein the detected group comprises at least a previous group, and determining whether the detected group has encountered the high-reflectivity obstacle based on the detection results of the plurality of detectors comprises:
when feature information of at least one of the detection results is greater than a predetermined high-reflectivity threshold in the detection results of the previous group, determining that the previous group has encountered the high-reflectivity obstacle, otherwise, determining that the previous group has not encountered the high-reflectivity obstacle.

24. The LiDAR of claim 23, wherein the feature information comprises at least one of intensity, amplitude, and reflectivity.

25. The LiDAR of claim 20, wherein determining the emission strategy for the next group of lasers based on whether the detected group has encountered the high-reflectivity obstacle and the light intensity of the emitted lasers comprises:
when determining that the detected group has encountered the high-reflectivity obstacle, using a different emission strategy from the previous group for the next group of lasers based on the light intensity of the emitted lasers; or
when determining that the detected group has not encountered the high-reflectivity obstacle, using a predetermined emission strategy for the next group of lasers based on the light intensity of the emitted lasers.

26. The LiDAR of claim 25, wherein when determining that the detected group has encountered the high-reflectivity obstacle, using the different emission strategy from the previous group for the next group of lasers based on the light intensity of the emitted lasers comprises:
determining a high-reflectivity area in the previous group, wherein the high-reflectivity area comprises an area covered by the high-reflectivity obstacle and an area affected by crosstalk from a reflection signal of the high-reflectivity obstacle; and
using a different emission strategy from the previous group for detection channels adjacent to the high-reflectivity area within the next group based on the light intensity of the emitted lasers.

27. The LiDAR of claim 26, wherein determining the high-reflectivity area in the previous group comprises:
determining a detection channel within the previous group where the feature information of detection result is greater than the high-reflectivity threshold as the high-reflectivity area.

28. The LiDAR of claim 26, wherein using the different emission strategy from the previous group for the detection channels adjacent to the high-reflectivity area within the next group based on the light intensity of the emitted lasers comprises one of the following situations:
when the emission strategy of the previous group is the high intensity, determining the light intensity of the detection channels adjacent to the high-reflectivity area within the next group as the low intensity; or
when the emission strategy of the previous group is the low intensity, determining the light intensity of the detection channels adjacent to the high-reflectivity area within the next group as the non-emission.

29. The LiDAR of claim 25, wherein when determing that the detected group has encountered the high-reflectivity obstacle, using the different emission strategy from the previous group for the next group of lasers based on the light intensity of the emitted lasers further comprises:
using the high intensity to emit light for detection channels that are not adjacent to the high-reflectivity area within the next group.

30. The LiDAR of claim 25, wherein when the light intensity of the previous group is not the non-emission, the predetermined emission strategy comprises the light intensity of all detection channels being the high intensity.

31. The LiDAR of claim 26, wherein when the light intensity of the previous group comprises the non-emission, the predetermined emission strategy comprises the light intensity of detection channels adjacent to non-emission detection channels being the low intensity, and the light intensity of other detection channels being the high intensity.

32. The LiDAR of claim 26, further comprising:
processing unreliable detection results to determine corresponding correction signals, wherein the unreliable detection results comprise at least one of:
a detection result corresponding to a detection channel with the light intensity being the low intensity and located outside the high-reflectivity area;
a detection result corresponding to a detection channel with the light intensity being the non-emission; and
a detection result corresponding to a detection channel with the light intensity being the non-emission, and a detection result corresponding to a detection channel within a group where the light intensity of at least one detection channel is the high intensity and located inside the high-reflectivity area.

33. The LiDAR of claim 32, wherein determine the corresponding correction signals comprises at least one of:
re-detecting based on the unreliable detection results to determine the correction signals; and
fusing features of detection results of other detection channels adjacent to detection channels corresponding to the unreliable detection results to determine the correction signals.
